# EUROPEAN PATENT APPLICATION

(11) **EP 4 793 726 A1**
(43) Date of publication of application: **19.08.2026**
(21) Application number: 24876996.0
(22) Date of filing: 17.09.2024
(51) Int. Cl.: G05B 23/02

(54) **DIAGNOSTIC DEVICE**

(30) Priority: 12.10.2023 JP 2023176818
(71) Applicant: DENSO CORPORATION, Kariya-city, Aichi 448-8661 (JP)
(72) Inventor: MIZUNO, Fumiaki, Kariya-city, Aichi 448-8661 (JP); MAWATARI, Kazuaki, Kariya-city, Aichi 448-8661 (JP)
(74) Representative: Kuhnen & Wacker Patent- und Rechtsanwaltsbüro PartG mbB
(86) International application number: PCT/JP2024/033091
(87) International publication number: WO 2025/079397

(57) **Abstract**

A diagnostic device includes at least one detection unit (11, 12, 13, 14, 15) that detects a state of a diagnosis target (2), a data acquisition unit (S100) that repeatedly acquires data indicating the state of the diagnosis target from the detection unit, a rank recognition unit (S120, S130) that repeatedly recognizes a rank indicating an abnormality degree of the diagnosis target based on the acquired data, a storage control unit (S150A, S150B, S152A, S152B) that repeatedly stores the acquired data together with the rank and acquisition order information in the storage unit, and a rank determination unit (S151A, S151B) that determines as to establishment of either one of a latest rank indicating an abnormality degree higher than the lowest rank and the latest rank matching the lowest rank in the abnormality degree. Upon determining the establishment, the storage control unit stores the latest data in the storage unit in place of the lowest rank data.

## Description

### CROSS REFERENCE TO RELATED APPLICATIONS

This application is based on Japanese Patent Application No. 2023-176818 filed on October 12, 2023, contents of which are incorporated herein by reference.

### TECHNICAL FIELD

The present disclosure relates to a diagnostic device.

### BACKGROUND ART

A monitoring device has been proposed that facilitates analyzing a cause of abnormal operation by simultaneously reproducing data at a time of abnormality detection (see, for example, Patent Literature 1). Specifically, an image signal captured by a monitoring camera is input to an image processing device and displayed on a multi-window display and stored in a main storage device. An audio signal collected by a microphone is input to a sound processing device and played by a speaker and stored in the main storage device.

When an abnormality in a monitoring target is detected, the data before and after the abnormality detection among respective data stored in the main storage device is saved into an auxiliary storage device. The saved data is then played back on the display and speaker in synchronization with each other. This facilitates analyzing a cause of the abnormality.

### PRIOR ART LITERATURE

### PATENT LITERATURE

Patent Literature 1: JP H06-289927 A

### SUMMARY OF INVENTION

According to study by the inventors, the above monitoring device repeatedly stores data in the main storage device, so that a large amount of data is stored in the main storage device. Therefore, the main storage device with a large storage capacity is required to store the large amount of data. This increases the storage capacity of the main storage device (i.e., storage unit) of the monitoring device (i.e., diagnostic device).

An object of the present disclosure is to provide a diagnostic device that suppresses an increase in storage capacity of a storage unit.

According to one aspect of the present disclosure, a diagnostic device includes:
a storage unit for storing data;
at least one detection unit that detects a state of a diagnosis target;
a data acquisition unit that repeatedly executes acquiring data indicating the state of the diagnosis target from the detection unit;
a rank recognition unit that repeatedly recognizes a rank indicating an abnormality degree of the diagnosis target based on the data acquired by the data acquisition unit;
a storage control unit that repeatedly stores the data acquired by the data acquisition unit together with the rank and acquisition order information in the storage unit, the acquisition order information being information indicating in which order the data is acquired by the data acquisition unit,
   wherein a rank indicating a lowest abnormality degree among the ranks stored in the storage unit is a lowest rank, the data used by the rank recognition unit in recognizing the lowest rank is lowest rank data, the data acquired by the data acquisition unit at latest timing is latest data, and a rank recognized by the rank recognition unit based on the latest data is a latest rank; and
a rank determination unit (S151A, S151B) that determines whether or not either one of: the latest rank indicating the abnormality degree higher than the lowest rank; and the latest rank matching the lowest rank in the abnormality degree is established, wherein:
   when the rank determination unit determines that the either one is established, the storage control unit stores the latest data in the storage unit in place of the lowest rank data.

Therefore, because it is possible to an increase in storage capacity for storing the latest data and thus it is possible provide a diagnostic device that suppresses an increase in storage capacity of a storage unit.

### BRIEF DESCRIPTION OF THE DRAWINGS

FIG. 1 is a diagram showing a configuration of a diagnostic system as a whole in a first embodiment of the present disclosure to illustrate that the diagnostic system includes a diagnostic device for diagnosing a diagnosis target and a server.
FIG. 2 is a diagram for facilitating detailed description of an internal configuration of the diagnostic device in the first embodiment of FIG. 1 to illustrates that the diagnostic device includes a nonvolatile memory for storing data, rank, etc., and multiple sensors for acquiring data.
FIG. 3 is a diagram for showing a relationship between the rank, a state of the diagnosis target, and a protection priority used in a diagnostic process of the diagnostic device in the first embodiment of FIG. 1.
FIG. 4 is a flowchart showing the diagnostic process executed by a central processing unit of the diagnostic device in the first embodiment of FIG. 1.
FIG. 5 is a diagram for describing the central processing unit storing the data acquired from the microphone and a vibration sensor in a data storage area together with the rank and acquisition order information in the diagnostic process in the first embodiment of FIG. 4.
FIG. 6 is a diagram for facilitating description of an A-rank determination in the diagnostic process in the first embodiment of FIG. 4 to illustrate three events based on data output from the microphone.
FIG. 7 is a diagram for facilitating description of the rank determination executed by the central processing unit in the diagnostic process in the first embodiment of FIG. 4 to illustrate three events based on data output from the vibration sensor.
FIG. 8 is a flowchart showing details of a rank determination process executed by the central processing unit in the diagnostic process in the first embodiment of FIG. 4.
FIG. 9 is a diagram for facilitating description of a process, executed by the central processing unit in the diagnostic process in the first embodiment of FIG. 4, of storing data, rank, and acquisition order information in the data storage area of the nonvolatile memory.
FIG. 10 is a diagram for facilitating description of a process, executed by the central processing unit in the diagnostic process in the first embodiment of FIG. 4, of storing data, rank, and acquisition order information in the data storage area of the nonvolatile memory.
FIG. 11 is a flowchart showing details of a transmission process in the diagnostic process executed by the central processing unit in the first embodiment of FIG. 4.
FIG. 12 is a diagram for facilitating description of a specific example in which the central processing unit in the first embodiment of FIG. 11 executes the transmission process, so that data, rank, and acquisition order information acquired from the data storage area is transmitted to the server.
FIG. 13 is a flowchart showing details of a transmission process in the diagnostic process executed by the central processing unit in a second embodiment.
FIG. 14 is a diagram for facilitating description of a specific example in which the central processing unit in the second embodiment of FIG. 13 executes the transmission process, so that data, rank, and acquisition order information acquired from the data storage area is transmitted to the server.
FIG. 15 a flowchart showing details of a transmission process in the diagnostic process executed by the central processing unit in a third embodiment.
FIG. 16 is a diagram for facilitating description of a specific example in which the central processing unit in the third embodiment of FIG. 15 executes the transmission process, so that data, rank, and acquisition order information acquired from the data storage area is transmitted to the server.
FIG. 17 is a flowchart showing details of a transmission process in the diagnostic process executed by the central processing unit in a fourth embodiment.
FIG. 18 is a diagram for facilitating description of a specific example in which the central processing unit in the fourth embodiment of FIG. 17 executes the transmission process, so that data, rank, and acquisition order information acquired from the data storage area is transmitted to the server.
FIG. 19 is a flowchart showing details of a transmission process in the diagnostic process executed by the central processing unit in a fifth embodiment.
FIG. 20 is a flowchart showing details of a transmission process in the diagnostic process executed by the central processing unit in a sixth embodiment.
FIG. 21 is a diagram for facilitating description of an A-rank determination in the diagnostic process in the sixth embodiment of FIG. 20 to illustrate three events based on data output from the microphone.
FIG. 22 is a diagram for facilitating description of the rank determination executed by the central processing unit in the diagnostic process in the sixth embodiment of FIG. 20 to illustrate three events based on data output from the vibration sensor.
FIG. 23 is a flowchart showing details of the diagnostic process of the diagnostic device in a seventh embodiment of the present disclosure.
FIG. 24 is a diagram for facilitating detailed description of a sensor mode setting process of the diagnostic process of the diagnostic device in FIG. 23 of the seventh embodiment to facilitate description of operation of the sensor in each of a high functionality mode, a medium functionality mode and a low functionality mode.

### EMBODIMENTS FOR CARRYING OUT INVENTION

Embodiments of the present disclosure will be described below with reference to the drawings. In the following embodiments, the same or equivalent portions are denoted by the same reference symbols the drawings to simplify the description.

### (First Embodiment).

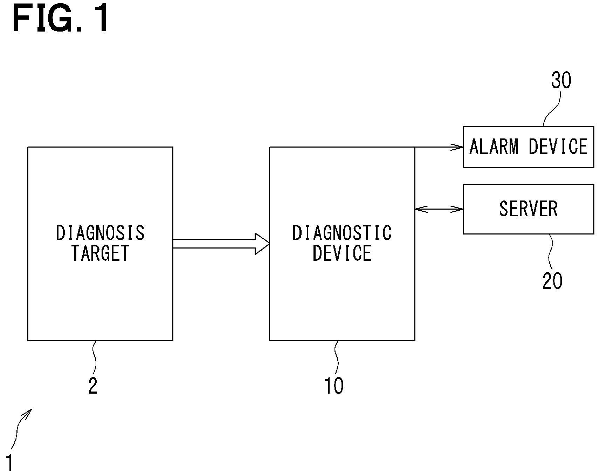

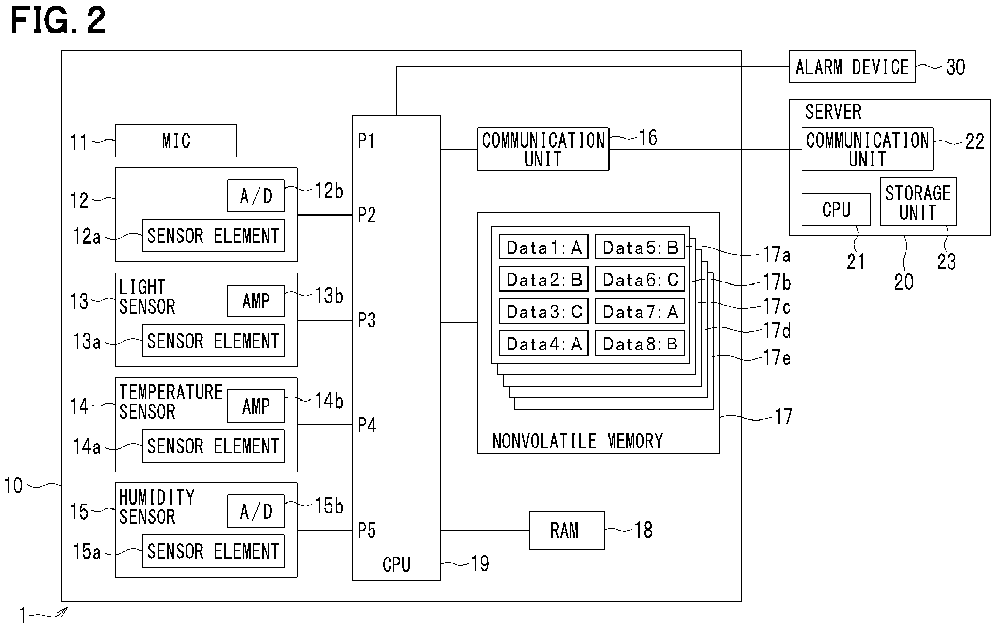

A first embodiment of a diagnostic system 1 applied with a diagnostic device 10 of the present disclosure will be described with reference to FIG. 1, FIG. 2, etc. FIG. 1 is a block diagram showing a configuration of the diagnostic system 1 as a whole of the first embodiment. FIG. 2 is a block diagram showing an electrical configuration of the diagnostic system 1 of the first embodiment.

The diagnostic system 1 of the first embodiment shown in FIG. 1 is a system where a diagnostic device 10 diagnoses the diagnosis target 2 using sound and vibration conducted from the diagnosis target 2 and using light intensity and temperature around the diagnosis target 2 and the like.

For example, a blade tool used in FA equipment for cutting and grinding is used as the diagnosis target 2 in the present embodiment. The FA equipment is production machinery used to automatically manufacture industrial products and is employed in a factory or a plant facility.

Specifically, the diagnostic system 1 in the present embodiment includes a diagnostic device 10, a server 20, and an alarm device 30, as shown in FIG. 2. The diagnostic device 10 includes a microphone 11, a vibration sensor 12, a light sensor 13, a temperature sensor 14, a humidity sensor 15, a communication unit 16, a nonvolatile memory 17, a RAM 18, and a central processing unit 19.

The microphone 11 is a sound sensor that detects sound conducted from the diagnosis target 2. The microphone 11 is used for detecting sound generated due to the diagnosis target 2 becoming an abnormal state. A sensor used as the microphone 11 in the present embodiment detects not only sound in a human audible frequency range but also sound with higher frequencies and sound with lower frequencies outside the human audible frequency range.

The vibration sensor 12 is a sensor that detects, in six axis directions, magnitude of the vibration conducted from the diagnosis target 2. Specifically, the vibration sensor 12 includes a sensor element 12a that detects the magnitude of the vibration in the six axis directions and an analog-to-digital converter 12b that converts the output signal of the sensor element 12a into a digital signal.

The vibration sensor 12 is used to detect vibration generated due to the diagnosis target 2 becoming the abnormal state. The six axis directions are X, Y, and Z directions in the Cartesian coordinates of XYZ, a rotation direction around the X direction, a rotation direction around the Y direction, and a rotation direction around the Z direction.

The light sensor 13 is a sensor that detects a light intensity around the diagnosis target 2. Specifically, the light sensor 13 includes a sensor element 13a that detects light intensity and an amplification circuit 13b that amplifies an output signal of the sensor element 13a by voltage and outputs this voltage amplified signal to the central processing unit 19.

The light sensor 13 is used to detect that a foreign object is present in the vicinity of the diagnosis target 2 and the diagnosis target 2 is in an abnormal state. In normal conditions, the light sensor 13 detects that a received light intensity is above a given value due to light from a light-emitting object or natural light, while in abnormal conditions, the light-receiving amount of the light sensor 13 is assumed to be less than a given value due to a foreign object blocking the light to the light sensor 13.

The temperature sensor 14 is a sensor that detects temperature around the diagnosis target 2. Specifically, the temperature sensor 14 includes a sensor element 14a that detects temperature around the diagnosis target 2 and an amplification circuit 14b that amplifies an output signal of the sensor element 14a by voltage and outputs this voltage amplified signal to the central processing unit 19.

The temperature sensor 14 is used to detect that the diagnosis target 2 becomes an abnormal state such as a low temperature state and a high temperature state. In addition to this, the temperature sensor 14 can detect temperature indicative of a state of environment around the diagnosis target 2.

The humidity sensor 15 is a sensor that detects humidity in the vicinity of the diagnosis target 2. Specifically, the humidity sensor 15 includes a sensor element 15a that detects the humidity around the diagnosis target 2 and an analog-to-digital converter 15b that converts an output signal of the sensor element 15a into a digital signal.

The humidity sensor 15 is used to detect that the diagnosis target 2 becomes an abnormal state such as a low humidity state and a high humidity state. In addition to this, the humidity sensor 15 can detect humidity indicating a state of environment around the diagnosis target 2.

As described above, sensors other than an imaging sensor imaging the diagnosis target 2 are employed as the sensors 11, 12, 13, 14, 15. The sensors 11, 12, 13, 14, 15, respectively, detect multiple types of the state of the diagnosis target 2 and output detection signals indicating the multiple types of the state of the diagnosis target 2.

The sensor 11, 12, 13, 14, 15 is a collective term for the microphone 11, the vibration sensor 12, the light sensor 13, the humidity sensor 15, and the temperature sensor 14. In the diagnostic device 10 of the present embodiment, the imaging sensor for imaging the diagnosis target 2 is not used.

Because of this, the diagnostic device 10 can acquire each data indicating the state of the diagnosis target 2 by each sensor 11, 12, 13, 14, 15 except for the imaging sensor for imaging the diagnosis target 2.

To the server 20 via a LAN, the communication unit 16 transmits data, rank, and acquisition order information which are output from the central processing unit 19. The nonvolatile memory 17 and the RAM 18 are included in a non-transitory tangible storage medium for storing data.

Specifically, a computer program executed by the central processing unit 19 is stored on the nonvolatile memory 17. The nonvolatile memory 17 is a storage unit including data storage areas 17a, 17b, 17c, 17d, 17e where data from the sensors 11, 12, 13, 14, 15 acquired by the central processing unit 19 are stored on a sensor-by-sensor basis together with the rank and the acquisition order information.

The RAM 18 is a random-access memory such as DRAM, SRAM and is used to temporarily store data acquired by the central processing unit 19, as described below. The DRAM is an abbreviation for Dynamic RAM, and the SRAM is an abbreviation for Static RAM.

The central processing unit 19 executes a diagnostic process according to the computer program stored on the nonvolatile memory 17.

In executing the diagnostic process, the central processing unit 19 acquires each data from the sensor 11, 12, 13, 14, 15, recognizes a rank of the diagnosis target 2 based on each data, and stores the data, the rank, and the acquisition order information in the nonvolatile memory 17 for each sensor.

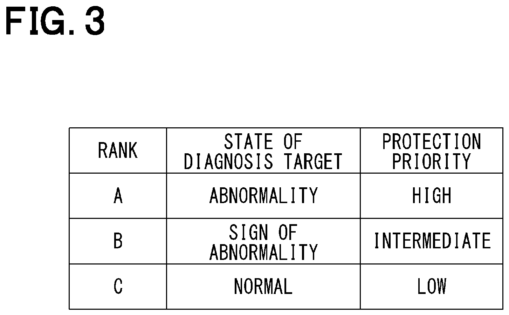

Here, the rank is information indicating a degree to which the diagnosis target2 is abnormal. The degree to which the diagnosis target2 is abnormal is hereinafter referred to simply as an abnormality degree. In the present embodiment, one rank is recognized by the central processing unit 19 from among an A-rank, a B-rank, and a C-rank shown in FIG. 3.

The A-rank is a rank indicative of a high abnormality degree of the diagnosis target 2 and is the highest rank indicative of the highest abnormality degree among the A-rank, the B-rank, and the C-rank. The B-rank is a rank indicating that the diagnosis target 2 shows a sign of abnormality, and indicative of an intermediate abnormality degree among the A-rank, the B-rank and the C-rank.

The C-rank is a rank indicating that the diagnosis target 2 is normal. The C-rank is indicative of the lowest abnormality degree among the A-rank, the B-rank, and the C-rank.

In the present embodiment, as the abnormality degree of the rank is lower, the data is of less importance for analyzing the state of the diagnosis target 2 and thus data protection priority is lower. The data protection priority is priority of storing data in the data storage areas 17a, 17b, 17c, 17d, 17e of the nonvolatile memory 17 for data protection.

The acquisition order information indicates in which order the central processing unit 19 acquires the data from the sensor 11, 12, 13, 14, 15. The central processing unit 19 may use a point of time of acquisition of the data from the sensor 11, 12, 13, 14, 15 as the acquisition order information.

In the diagnostic device 10, a secondary battery may be used as a power supply device to supply DC power to the sensor 11, 12, 13, 14, 15, the communication unit 16, the nonvolatile memory 17, the RAM 18, and the central processing unit 19. Alternatively, the power supply device may be a device that outputs DC power based on AC power supplied by a commercial power source.

The alarm device 30 is controlled by the central processing unit 19 to issue an alarm to a surrounding area by sound, light, display, etc.

The server 20 is an external device and is a computer with a central processing unit 21, a communication unit 22, and a memory 23. In the memory 23, the central processing unit 21 stores the rank, the acquisition order information and the data for each sensor received from the communication unit 16 of the diagnostic device 10 via the communication unit 22.

The rank, the acquisition order information and the data for each sensor stored in the memory 23 of the present embodiment is used to analyze the state of the diagnosis target 2. For example, in cases where the diagnosis target 2 is a blade tool, analysis is performed on a state of the blade tool by successively comparing, for each data, the data and the rank with a state of a product (e.g., cut surface) actually cut by the blade tool.

The communication unit 22 performs data transmission and data reception with the communication unit 16 of the diagnostic device 10 through the LAN. The memory 23 stores a variety of information such as the rank, the acquisition order information, and the data for each sensor. The memory 23 in the present embodiment includes a nonvolatile memory, a hard disk, etc. The memory 23 is a non-transitory tangible storage medium.

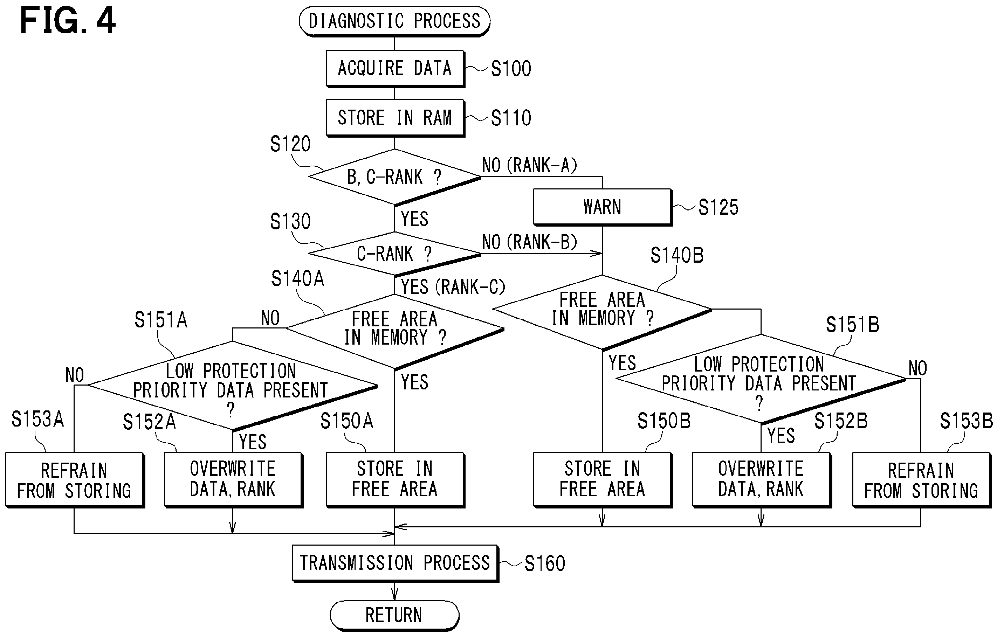

Next, the operation of the diagnostic device 10 in the present embodiment will be described with reference to FIG. 4 and others. FIG. 4 is a flowchart showing details of the diagnostic process by the central processing unit 19 First, the microphone 11 detects the sound conducted from the diagnosis target 2 and outputs a detection signal indicating this detected sound to a port P1 of the central processing unit 19.

In the vibration sensor 12, the sensor element 12a detects the magnitude of the vibration in each of the six axis directions conducted from the diagnosis target 2. The analog-to-digital converter 12b converts the magnitude of the vibration in each axis direction detected by the sensor element 12a into a digital signal and outputs it to a port P2 of the central processing unit 19.

In the light sensor 13, the sensor element 13a detects a light intensity around the diagnosis target 2 and outputs a detection signal indicating this light intensity to the amplification circuit 13b. The amplification circuit 13b amplifies the detection signal output from the sensor element 13a by voltage and outputs it to a port P3 of the central processing unit 19.

In the temperature sensor 14, the sensor element 14a detects the temperature around the diagnosis target 2 and outputs a detection signal indicating this detected temperature to the amplifier circuit 14b. The amplification circuit 14b amplifies the detection signal output from the sensor element 14a by voltage and outputs it to a port P4 of the central processing unit 19.

In the humidity sensor 15, the sensor element 15a detects the humidity around the diagnosis target 2 and outputs a detection signal indicating this detected humidity to the analog-to-digital converter 15b. The analog-to-digital converter 15b converts the detection signal output from the sensor element 15a into a digital signal and outputs it to a port P5 of the central processing unit 19.

Here, the ports P1, P3, and P4 of the central processing unit 19, respectively, are input ports for receiving the detection signals of the sensors 11, 13, and 14, which are analog signals. The ports P2 and P5 of the central processing unit 19, respectively, are input ports for receiving the detection signals of the sensors 12 and 15, which are digital signals.

The central processing unit 19 repeatedly executes the diagnostic process according to the flowchart in FIG. 4. By way of specific example, the diagnostic process for the N-th time executed by the central processing unit 19 will be described below. N is an integer denoting an execution count of the diagnostic process.

First, in step S100, the central processing unit 19 converts the detection signal of the sensor 11, 13, 14 input to the port P1, P3, P4 into a digital signal for each sensor. Thereby, the central processing unit 19 acquires the digital signal for each sensor as data representing the detection signal from the sensor 11, 13, 14.

In addition to this, in the step S100, the central processing unit 19 acquires the digital signal input to the port P2 from the analog-to-digital converter 12b of the vibration sensor 12 as data indicating the detection signal of the vibration sensor 12.

Furthermore, the central processing unit 19 acquires the digital signal input to the port P5 from the analog-to-digital converter 15b of the humidity sensor 15 as data indicating the detection signal of the humidity sensor 15.

As described, the central processing unit 19 as a data acquisition unit acquires the data for each sensor indicating the detection value of the sensor 11, 12, 13, 14, 15.

Next, in step S110, the central processing unit 19 stores the above-acquired data for each sensor in the RAM 18.

Next, in steps S120 and S130, the central processing unit 19 as a rank recognition unit recognizes the rank indicative of the degree to which the diagnosis target 2 is abnormal based on the data of the respective sensors. In other words, the central processing unit 19 recognizes the rank of the diagnosis target 2 based on the data of multiple items acquired from the sensors 11 to 15. Details of a rank recognition process in steps S120 and S130 will be described later.

First, when the diagnosis target 2 is recognized as either the B-rank or the C-rank, the determination in step S120 by the central processing unit 19 results in YES.

Next, when the diagnosis target 2 is recognized as the C-rank, the determination in step S130 by the central processing unit 19 results in YES. Hereafter, the data used in recognizing the diagnosis target 2 as the C-rank is referred to as C-rank data.

For example, the central processing unit 19 stores the data acquired from the microphone 11 in the data storage area 17a together with the C-rank and the acquisition order information, as described below.

Specifically, in step S140A, the central processing unit 19 determines whether or not a free area in which no data is stored is present in the data storage area 17a.

At this time, when the free area is present in the data storage area 17a, the determination in S140A by the central processing unit 19 results in YES. Accordingly, in step S150A, the central processing unit 19 as a storage control unit stores the C-rank data, the C-rank, and the acquisition order information in the free area of the data storage area 17a.

At this time, the central processing unit 19 may perform data compression on the C-rank data, the C-rank, and the acquisition order information and store in the free area of the data storage area 17a.

When the free area is absent in the data storage area 17a, the determination in S140A by the central processing unit 19 results in NO. In this case, in step S151A, the central processing unit 19 determines whether or not low-protection-priority data is present in the data storage area 17a.

The data, the rank, and the acquisition order information acquired in the past diagnostic process are stored in the data storage area 17a. The low-protection-priority data is data with a lower protection priority than the C-rank data acquired in step S100 above.

In the present embodiment, the data acquired at the latest timing in step S100 is referred to as the latest data, and the rank recognized in steps S120 and S130 based on the latest data is referred to as the latest rank.

The C-rank data is the data acquired in step S100 of the diagnostic process for the N-th time, as described above. Therefore, the C-rank data is the latest data acquired at the latest timing. At this time, the latest rank is the C-rank.

Among the ranks stored in the data storage area 17a, the rank indicative of the lowest abnormality degree is referred to as the lowest rank. The data used in recognizing this lowest rank in steps S120 and S130 is referred to as the lowest rank data.

In step S151A, the central processing unit 19 determines whether or not the latest rank being the C-rank and the lowest rank match each other in terms of the abnormality degree.

When the latest C-rank and the lowest rank match each other in the abnormality degree, the determination in step S151A by the central processing unit 19 results in YES as the low-protection-priority data is present in the data storage area 17a. In this case, the lowest rank is the C-rank, and the lowest rank data is the C-rank data.

As described above, the determination in step S151A by the central processing unit 19 results in YES. In this case, when there is one lowest rank data stored in the data storage area 17a, the one lowest rank data is the low-protection-priority data.

In this case, in step S152A, the central processing unit 19 as a storage control unit stores the C-rank data being the latest data in the data storage area 17a in place of the low-protection-priority data. In addition to this, the central processing unit 19 stores the C-rank being the latest rank in the data storage area 17a in place of the lowest rank.

Furthermore, the central processing unit 19 stores the acquisition order information of the latest data in the data storage area 17a in place of the acquisition order information of the low-protection-priority data. At this time, the central processing unit 19 may perform data compression on the C-rank data, the C-rank, and the acquisition order information to store in the data storage area 17a.

When there are multiple C-rank data stored in the data storage area 17a, the C-rank data acquired at the oldest timing among the multiple C-rank data is the low-protection-priority data.

In this case as well, in step S152A, the central processing unit 19 stores the C-rank data being the latest data in the data storage area 17a in place of the C-rank data being the low-protection-priority data.

In addition to this, the central processing unit 19 stores the C-rank being the latest rank in the data storage area 17a in place of the C-rank being the lowest rank. Furthermore, the central processing unit 19 stores the acquisition order information of the latest data in the data storage area 17a in place of the acquisition order information of the low-protection-priority data.

As described above, when the C-rank data is acquired from the microphone 11 in step S100, the central processing unit 19 stores the data, the C-rank, and the acquisition order information in the data storage area 17a.

When the C-rank data are acquired from the respective sensors 12 to 15, the central processing unit 19 stores the data, the C-rank, and the acquisition order information in the data storage area 17b to 17e for each sensor, as in the case of the microphone 11 described above.

When the C-rank being the latest rank indicates a lower abnormality degree than the lowest rank, the determination in step S151A by the central processing unit 19 results in NO as the low-protection-priority data is absent in the data storage area 17a.

Specifically, when the C-rank data is absent in the data storage area 17a and there are the A-rank data and the B-rank data stored, the determination in step S151A by the central processing unit 19 results in NO as the low-protection-priority data is absent in the data storage area 17a.

In this case, in step S153A, the central processing unit 19 refrains from storing the C-rank data acquired in step S100 of the diagnostic process for the N-th time in the data storage area 17a. The central processing unit 19 refrains from storing the C-rank being the latest rank in the data storage area 17a.

Furthermore, the central processing unit 19 refrains from storing the acquisition order information of the latest data in the data storage area 17a.

When the C-rank data are acquired from respective sensors 12 to 15 and the low-protection-priority data is absent in the data storage areas 17b to 17e, the central processing unit 19 refrains from storing the data, the C-rank, and the acquisition order information in the data storage area 17b to 17e.

The sensor 12 to 15 is a collective term for the vibration sensor 12, the light sensor 13, the temperature sensor 14, and the humidity sensor 15. The data storage area 17b to 17e is a collective term for the data storage areas 17b, 17c, 17d, 17e.

When the central processing unit 19 recognizes the A-rank of the diagnosis target 2 based on the data of the respective sensors, the determination in the above step S120 results in NO. The data used in recognizing the A-rank as described is referred to as an A-rank data.

Next, in step S125, the central processing unit 19 controls the alarm device 30 to issue an alarm. Because of this, the alarm device 30 informs the surrounding that the diagnosis target 2 is abnormal.

Next, in step S140B, the central processing unit 19 determines whether or not the free area in which no data is stored is present in the data storage area 17a.

At this time, when the free area is present in the data storage area 17a, the determination in step S140B by the central processing unit 19 results in YES. Accordingly, in step S150B, the central processing unit 19 as a storage control unit stores the A-rank data, the A-rank, and the acquisition order information in the free area of the data storage area 17a.

At this time, the central processing unit 19 may perform data compression on the A-rank data, the A-rank, and the acquisition order information to store in the free area of the data storage area 17a.

When the free area is absent in the data storage area 17a, the determination in step S140B by the central processing unit 19 results in NO. Accordingly, in step S151B, the central processing unit 19 determines whether or not there is low-protection-priority data stored in the data storage area 17a.

The low-protection-priority data is data with a lower protection priority than the A-rank data acquired in step S100 above.

Here, because the A-rank data is the data acquired in step S100 of the diagnostic process for the N-th time, the A-rank data is the latest data acquired at the latest timing. The A-rank recognized in step S120, S130 based on the A-rank data is the latest rank.

Among the ranks stored in the data storage area 17a, the rank indicating the lowest abnormality degree is referred to as the lowest rank. The data used in recognizing this lowest rank in step S120, S130 is referred to as the lowest rank data.

In step S151B, the central processing unit 19 determines whether or not one of the following conditions (a) and (b) is established: (a) the central processing unit 19 determines that the A-rank indicates a higher abnormality degree than the lowest rank; and (b) the central processing unit 19 determines that the A-rank and the lowest rank match each other in terms of the abnormality degree.

In the above, when the A-rank indicates the abnormality degree higher than the lowest rank, the determination in step S151B by the central processing unit 19 results in YES.

When the A-rank and the lowest rank match each other in the abnormality degree, the determination in step S151B by the central processing unit 19 results in YES. When the determination in step S151B by the central processing unit 19 results in YES as described, the determination results in YES as there is the low-protection-priority data in the data storage area 17a.

Here, when there is one lowest rank data stored in the data storage area 17a, the one lowest rank data is the low-protection-priority data. In this case, in step S152B, the central processing unit 19 as a storage control unit stores the A-rank data in the data storage area 17a in place of the low-protection-priority data.

In addition to this, the central processing unit 19 stores the A-rank being the latest rank in the data storage area 17a in place of the lowest rank. Furthermore, the central processing unit 19 stores the acquisition order information of the latest data in the data storage area 17a in place of the acquisition order information of the low-protection-priority data.

At this time, the central processing unit 19 may perform data compression on the A-rank data, the A-rank, and the acquisition order information to store in the free area of the data storage area 17a. When there are multiple lowest-rank data stored in the data storage area 17a, the lowest-rank data acquired at the oldest timing among the multiple A-rank data is the low-protection-priority data.

In this case as well, the central processing unit 19 stores the A-rank data in the data storage area 17a in place of the low-protection-priority data in step S152B. In addition to this, the central processing unit 19 stores the A-rank being the latest rank in the data storage area 17a in place of the lowest rank.

Furthermore, the central processing unit 19 stores the acquisition order information of the latest data in the data storage area 17a in place of the acquisition order information of the low-protection-priority data. As described, when the data is acquired from the microphone 11 in step S100 and the A-rank is recognized in step S120, the central processing unit 19 stores the A-rank data, the A-rank, and the acquisition order information in the data storage area 17a.

At this time, the central processing unit 19 may perform data compression on the A-rank data, the A-rank, and the acquisition order information to store in the data storage area 17a.

When the data for each sensor is acquired from the sensor 12 to 15 and the A-rank is recognized in step S120, the central processing unit 19 stores the data, the A-rank, and the acquisition order information in the data storage area 17b to 17e for each sensor, as in the case of the microphone 11 described above.

At this time, the central processing unit 19 may perform data compression on the A-rank data, the A-rank, and the acquisition order information to store in the data storage area 17b to 17e.

When the A-rank being the latest rank indicates the abnormality degree lower than the lowest rank, the determination in step S151B by the central processing unit 19 results in NO as the low-protection-priority data is absent in the data storage area 17a.

In this case, in step S153B, the central processing unit 19 refrains from storing the A-rank data in the data storage area 17a. The central processing unit 19 refrains from storing the A-rank being the latest rank in the data storage area 17a. Furthermore, the central processing unit 19 refrains from storing the acquisition order information of the latest data in the data storage area 17a.

Likewise, when the A-rank data is acquired from the sensor 12 to 15 and the low-protection-priority data is absent in the data storage area 17b to 17e, the central processing unit 19 refrains from storing the data, the A-rank, and the acquisition order information in the data storage area 17b to 17e.

When the diagnosis target 2 is recognized as the B-rank in step S130 described above, the determination in step S130 by the central processing unit 19 results in NO. Hereafter, the data used in recognizing the diagnosis target 2 as the B-rank is referred to as B-rank data.

Next, in step S140B, the central processing unit 19 determines whether or not a free area in which no data is stored is present in the data storage area 17a.

At this time, when the free area is present in the data storage area 17a, the determination in step S140B by the central processing unit 19 results in YES. Accordingly, the central processing unit 19 stores the B-rank data, the B-rank, and the acquisition order information in the free area of the data storage area 17a in step S150B.

At this time, the central processing unit 19 may perform data compression on the B-rank data, the B-rank, and the acquisition order information to store in the free area of the data storage area 17a.

When the free area is absent in the data storage area 17a, the determination in step S140B by the central processing unit 19 results in NO.

Accordingly, in step S151B, the central processing unit 19 determines whether or not there is low-protection-priority data stored in the data storage area 17a. The low-protection-priority data is data with a lower protection priority than the B-rank data acquired in step S100 above.

Here, because the B-rank data is the data acquired in step S100 of the diagnostic process for the N-th time, the B-rank data is the latest data acquired at the latest timing. The B-rank recognized in step S120, S130 based on the B-rank data is the latest rank.

Among the ranks stored in the data storage area 17a, the rank indicating the lowest abnormality degree is referred to as the lowest rank. The data used when this lowest rank is recognized in step S120, S130 is referred to as the lowest rank data.

In step S151B, the central processing unit 19 determines whether or not one of the following conditions (c) and (d) is established.

(c) The central processing unit 19 determines that the B-rank indicates the abnormality degree higher than the lowest rank. (d) The central processing unit 19 determines that the B-rank and the lowest rank match each other in terms of the abnormality degree.
When the B-rank indicates the abnormality degree higher than the lowest rank, the determination in step S151B by the central processing unit 19 results in YES.

When the B-rank and the lowest rank match each other in the abnormality degree, the determination in step S151B by the central processing unit 19 results in YES.

When the determination in step S151B by the central processing unit 19 results in YES as described, the determination results in YES as there is low-protection-priority data in the data storage area 17a. The low-protection-priority data is data with a lower protection priority than the B-rank data acquired in step S100 above.

Here, when there is one lowest rank data stored in the data storage area 17a, the one lowest rank data is the low-protection-priority data. In this case, the central processing unit 19 stores the B-rank data in the data storage area 17a in place of the low-protection-priority data in step S152B. In addition to this, the central processing unit 19 stores the B-rank being the latest rank in the data storage area 17a in place of the lowest rank.

Furthermore, the central processing unit 19 stores the acquisition order information of the latest data in the data storage area 17a in place of the acquisition order information of the low-protection-priority data. At this time, the central processing unit 19 may perform data compression on the B-rank data, the B-rank, and the acquisition order information to store in the data storage area 17a.

When there are multiple lowest-rank data stored in the data storage area 17a, the lowest-rank data acquired at the oldest timing among the multiple lowest-rank data is the low-protection-priority data.

In this case as well, the central processing unit 19 stores the B-rank data in the data storage area 17a in place of the low-protection-priority data in step S152B. In addition to this, the central processing unit 19 stores the B-rank being the latest rank in the data storage area 17a in place of the lowest rank.

Furthermore, the central processing unit 19 stores the acquisition order information of the latest data in the data storage area 17a in place of the acquisition order information of the low-protection-priority data. At this time, the central processing unit 19 may perform data compression on the B-rank data, the B-rank, and the acquisition order information to store in the data storage area 17a.

As described, when the B-rank data is acquired from the microphone 11 in step S100 and the B-rank is recognized in step S130, the central processing unit 19 stores the B-rank data, the B-rank, and the acquisition order information in the data storage area 17a.

When the B-rank data for each sensor is acquired from the sensor 12 to 15 and the B-rank is recognized in step S130, the central processing unit 19 stores the data, the B-rank, and the acquisition order information in the data storage area 17b to 17e, as in the case of the microphone 11 described above.

By steps S150A, S150B, S152A, S152B as described above, the central processing unit 19 stores the data, the rank, and the acquisition order information in the data storage area 17a, 17b, 17c, 17d, 17e.

The data, the rank, and the acquisition order information stored in the data storage area 17a, 17b, 17c, 17d, 17e as described above are used to analyze the diagnosis target 2.

When the B-rank indicates the abnormality degree lower than the lowest rank, the determination in step S151B by the central processing unit 19 results in NO as the low-protection-priority data is absent in the data storage area 17a.

In this case, in step S153B, the central processing unit 19 refrains from storing the B-rank data in the data storage area 17a. The central processing unit 19 refrains from storing the B-rank being the latest rank in the data storage area 17a. Furthermore, the central processing unit 19 refrains from storing the acquisition order information of the latest data in the data storage area 17a.

Likewise, when the B-rank data is acquired from the sensor 12 to 15 and the low-protection-priority data is absent in the data storage areas 17b to 17e, the central processing unit 19 refrains from storing the data, the B-rank, and the acquisition order information in the data storage areas 17b to 17e.

In the next step S160, the central processing unit 19 as a data transmission unit transmits the data, the rank, and the acquisition order information for each sensor stored in the data storage area 17a to 17e to the server 20 from the communication unit 16.

At this time, in step S160, the central processing unit 19 transmits the A-rank data to the server 20 preferentially over the B-rank data and the C-rank data. A transmission process in step S160 will be described in detail later.

In the server 20, the communication unit 22 receives the data for each sensor transmitted from the communication unit 22. The central processing unit 19 stores the data for each sensor received by the communication unit 22 in the memory 23. The data for each sensor stored in the memory 23 is used to analyze the diagnosis target 2.

As described above, the central processing unit 19 transmits the data, the rank, and the acquisition order information for each sensor to the server 20 so that the data, the rank, and the acquisition order information for each sensor are stored in the server 20.

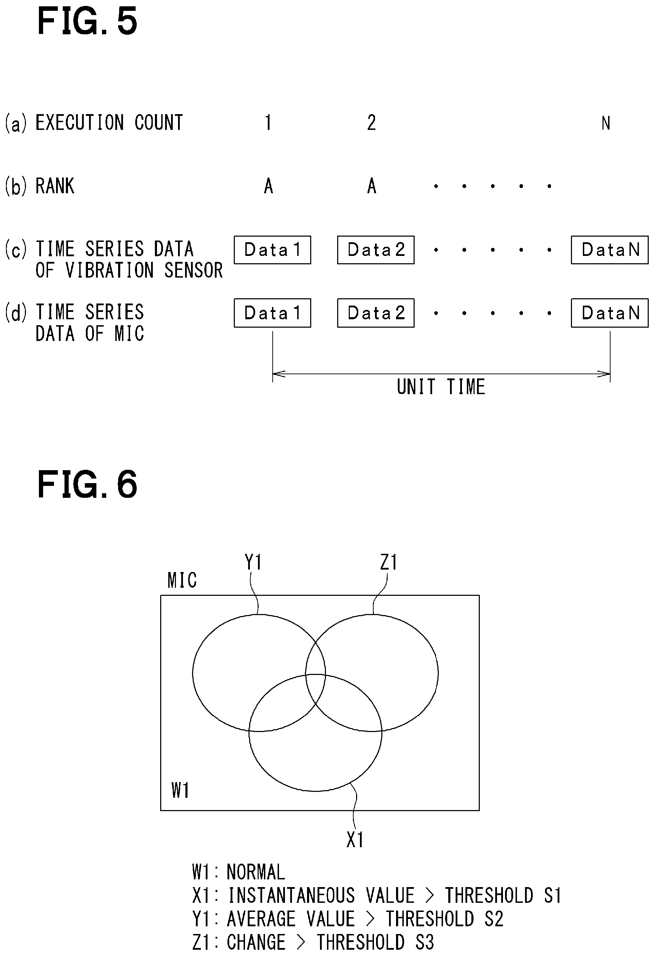

Next, a specific example of the diagnostic process by the central processing unit 19 for the blade tool of the FA equipment being the diagnosis target 2 using the sensor 11 and 12 among the sensors 11, 12, 13, 14, 15 in the diagnostic device 10 of the present embodiment will be described with reference to FIGS. 5 to 11. The sensor 11, 12 is a collective term for the microphone 11 and the vibration sensor 12.

First, as shown in FIG. 5, the central processing unit 19 acquires data 1 from each sensor 11, 12 in the diagnostic process for the first time. Accordingly, the central processing unit 19 recognizes the A-rank of the diagnosis target 2.

At this time, the central processing unit 19 stores the data 1 acquired from the microphone 11, together with the A-rank and the acquisition order information, in the data storage area 17a. In addition to this, the central processing unit 19 stores the data 1 acquired from the vibration sensor 12, together with the A-rank and the acquisition order information, in the data storage area 17b.

Next, the central processing unit 19 acquires data 2 from each sensor 11, 12 in the diagnostic process for the second time. Accordingly, the central processing unit 19 recognizes the A-rank of the diagnosis target 2.

At this time, the central processing unit 19 stores the data 2 acquired from the microphone 11 in the data storage area 17a together with the A-rank and the acquisition order information. The central processing unit 19 stores the data 2 acquired from the vibration sensor 12 in the data storage area 17b together with the A-rank and the acquisition order information.

In this way, each time the diagnostic process is executed, the central processing unit 19 acquires the data from each of the sensors 11 and 12. Accordingly, the central processing unit 19 recognizes the rank of the diagnosis target 2.

At this time, the central processing unit 19 stores the data acquired from the microphone 11, the rank, and the acquisition order information in the data storage area 17a. The central processing unit 19 stores the data acquired from the vibration sensor 12, the rank, and the acquisition order information in the data storage area 17b.

For illustrative purpose, the value indicated by the data acquired from the sensor 11, 12 for each diagnostic process by the central processing unit 19 is hereinafter referred to as an instantaneous value of the output signal of the sensor 11,12. A time length between the diagnostic process for the first time and the diagnostic process for the N-th time is defined as a unit time.

Here, the value indicated by the data acquired from the microphone 11 by the central processing unit 19 in the diagnostic process is referred to as an instantaneous value MaX of the output signal of the microphone 11. 1, 2, 3... N are each indicative of a count of execution of the diagnostic process is substituted for X.

Ma1, Ma2... MaN denote the instantaneous values of the output signals in respective diagnostic processes, ranging from the diagnostic process for the first time to the diagnostic process for the N-th time, acquired by the central processing unit 19 from the microphone 11. In other words, Ma1, Ma2, Ma3... MaN is the instantaneous value of the output signal for each diagnostic process acquired by the central processing unit 19 from the microphone 11 during the unit time.

Furthermore, as shown in mathematical expression (1) below, a total value dividing by N is the average value Av1 of the output signals of the microphone 11 during the unit time, wherein the total value is obtained by adding all of Ma1, Ma2.., MaN and N is the number of instantaneous values and the instantaneous value is a value for each diagnostic process. $Av 1 = \left(Ma1+Ma2+Ma3…+MaN\right) / N .$

A subtraction value refers to the instantaneous value MaN of the output signal acquired by the central processing unit 19 from the microphone 11 at the execution of the diagnostic process for the N-th time minus the instantaneous value Ma1 of the output signal acquired by the central processing unit 19 from the microphone 11 at the execution of the diagnostic process for the first time. The absolute value of this subtraction value is referred to as an amount of change dMa in the output signal of the microphone 11 per unit time, as shown in the following Mathematical expression (2). $dMa = \left|MaN-Ma1\right| .$

The value indicated by the data acquired from the vibration sensor 12 by the central processing unit 19 in the diagnostic process is referred to as an instantaneous value SN of the output signal of the vibration sensor 12. 1, 2, 3... N indicative of an execution count of the diagnostic process is substituted for X.

Sn1, Sn2, Sn3... SnN denote instantaneous values of the output signals in respective diagnostic processes, ranging from the diagnostic process for the first time to the diagnostic process for the N-th time, acquired by the central processing unit 19 from the vibration sensor 12. In other words, Sn1, Sn2, Sn3... SnN is the instantaneous value of the output signal for each diagnostic process acquired by the central processing unit 19 from the vibration sensor 12 during the unit time.

Furthermore, as shown in Mathematical expression (3) below, the added value acquired by adding all of Sn1, Sn2... SnN and dividing by N is the average value Av2 of the output signal of vibration sensor 12 over the unit period, wherein N is the number of instantaneous values per diagnostic process. $Av 2 = \left(Sn1+Sn2+Sn3…+SnN\right) / N .$

A subtraction value refers to the instantaneous value SnN of the output signal acquired by the central processing unit 19 from the vibration sensor 12 at the execution of the diagnostic process for the N-th time minus the instantaneous value of the output signal Sn1 acquired by the central processing unit 19 from the vibration sensor 12 at the execution of the diagnostic process for the first time. The absolute value of this subtraction value is referred to as an amount of change dSn in the output signal of the vibration sensor 12 per unit time, as shown in the following mathematical expression (4). $dSn = \left|SnN-Sn1\right| .$

Next, an abnormality determination for the blade tool of the FA equipment in FIG. 6 will be described using the instantaneous value MaN of the output signal of microphone 11, the average value Av1 of the output signal of the microphone 11, and the amount of change dMa in the output signal of the microphone 11 per unit time.

The central processing unit 19 performs the abnormality determination for the blade tool of the FA equipment via the following determinations (e), (f), (g).
(e) The central processing unit 19 determines whether or not the instantaneous value MaN of the output signal of the microphone 11 is greater than a threshold value S1, thereby determining whether or not the blade tool of the FA equipment is abnormal.
(f) The central processing unit 19 determines whether or not the average value AV1 of the output signal of the microphone 11 is greater than a threshold value S2, thereby determining whether or not the blade tool of the FA equipment is abnormal.
(g) The central processing unit 19 determines whether or not the amount of change dMa in the output signal of the microphone 11 is greater than a threshold value S3, thereby determining whether or not the blade tool of the FA equipment is abnormal.

An event X1 is defined as an event satisfying the following condition: the instantaneous value MaN of the output signal of the microphone 11 is greater than the threshold value S1. An event Y1 is defined as an event satisfying the following condition: the average value AV1 of the output signal of the microphone 11 is greater than the threshold value S2. An event Z1 is defined as an event satisfying the following condition: the amount of change dMa in the output signal of the microphone 11 is greater than the threshold value S3.

An event W1 is defined an event satisfying the following conditions: the instantaneous value MaN of the output signal of the microphone 11 is less than or equal to the threshold value S1; the average value AV1 of the output signal of the microphone 11 is less than or equal to the threshold value S2; and the amount of change dMa of the output signal of the microphone 11 is less than or equal to the threshold value S3. In other words, the event W1 indicates that the blade tool of the FA equipment is normal.

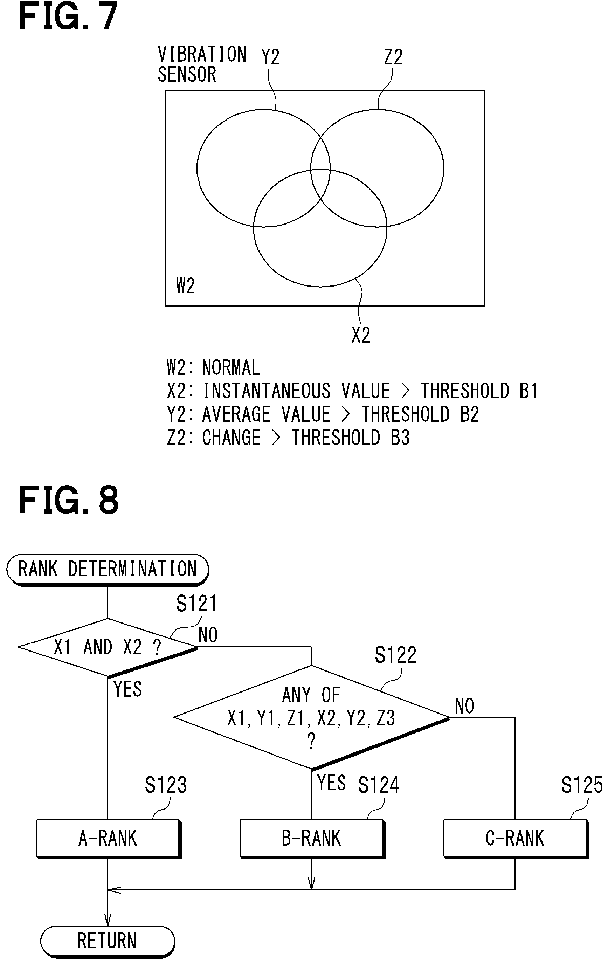

Next, the abnormality determination for the blade tool of the FA equipment in FIG. 7 will be described using the instantaneous value SnN of the output signal of the vibration sensor 12, the average value Av2 of the output signal of the vibration sensor 12, and the amount of change dSn in the output signal of the vibration sensor 12 per unit time.

The central processing unit 19 performs the abnormality determination for the blade tool of the FA equipment via the following determinations (h), (i), (j).
(h) The central processing unit 19 determines whether or not the instantaneous value SnN of the output signal of the vibration sensor 12 is greater than a threshold value B1, thereby determining whether or not the blade tool of the FA equipment is abnormal.
(i) The central processing unit 19 determines whether or not the average value Av2 of the output signal of the vibration sensor 12 is greater than a threshold value B2, thereby determining whether or not the blade tool of the FA equipment is abnormal.
(j) The central processing unit 19 determines whether or not the amount of change dSn of the output signal of the vibration sensor 12 is greater than a threshold value B3, thereby determining whether or not the blade tool of the FA equipment is abnormal.

An event X2 is defined as an event satisfying the following condition: the instantaneous value SnN of the output signal of the vibration sensor 12 is greater than the threshold value B1. The event Y2 is defined as an event satisfying the following condition: the average value Av2 of the output signal of the vibration sensor 12 is greater than the threshold value B2. The event Z2 is defined as an event satisfying the following condition: the amount of change dSn in the output signal of vibration sensor 12 is greater than the threshold value B3.

The event W2 is defined as an event satisfying the following condition: the instantaneous value SnN of the output signal of the vibration sensor 12 is less than or equal to the threshold value B1; the average value Av2 of the output signal of the vibration sensor 12 is less than or equal to the threshold value B2; and the amount of change dSn in the output signal of the vibration sensor 12 is less than or equal to the threshold value B3. In other words, the event W2 indicates that the blade tool of the FA equipment is normal.

Next, the details of the rank determination process in the diagnostic process for the N-th time will be described with reference to FIG. 8 using the events X1, X2, Y1, W1, X1, X2, Y2, W2.

FIG. 8 is a flowchart showing details of a rank determination process in step S120, S130 of FIG. 4. The central processing unit 19 executes the rank determination process according to the flowchart in FIG. 8.

First, in step S121, the central processing unit 19 as a first abnormality determination unit determines whether or not the instantaneous value MaN of the output signal of the microphone 11 is greater than the threshold value S1 and the instantaneous value SnN of the output signal of the vibration sensor 12 is greater than the threshold value B1.

In other words, the central processing unit 19 determines whether or not the data acquired from the microphone 11 and the data acquired from the vibration sensor 12 are all abnormal.

When the instantaneous value MaN of the output signal of the microphone 11 is greater than the threshold value S1 and the instantaneous value SnN of the output signal of the vibration sensor 12 is greater than the threshold value B1, the determination in step S121 by the central processing unit 19 results in YES.

Specifically, the determination in step S121 by the central processing unit 19 results in YES as the events X1 and X2 are both established. In other words, the central processing unit 19 determines that the data acquired from the microphone 11 and the data acquired from the vibration sensor 12 are all abnormal. Accordingly, the central processing unit 19 determines in step S121 that the blade tool of the FA device is the A-rank.

Either when the instantaneous value MaN of the output signal of the microphone 11 is less than or equal to the threshold value S1 or when the instantaneous value SnN of the output signal of the vibration sensor 12 is less than or equal to the threshold value B1, the determination in step S121 by the central processing unit 19 results in NO.

Specifically, the determination in step S121 by the central processing unit 19 results in NO as not both the events X1 and X2 are established. In the next step S122, the central processing unit 19 determines whether or not at least one of the events X1, Y1, Z1, X2, Y2, Z2 is established.

Specifically, when any one of the following (k) (l) (m) (n) (o) (p) is established, the determination in step S122 by the central processing unit 19 results in YES as at least one of the events X1, Y1, Z1, X2, Y2, Z2 is established.
(k) The central processing unit 19 determines that the instantaneous value MaN of the output signal of the microphone 11 is greater than the threshold value S1. (l) The central processing unit 19 determines that the average value Av1 of the output signal of the microphone 11 is greater than the threshold value S2. (m) The central processing unit 19 determines that the amount of change dMa of the output signal of the microphone 11 is greater than the threshold value S3.
(n) The central processing unit 19 determines that the instantaneous value SnN of the output signal of the vibration sensor 12 is greater than the threshold value B1. (o) The central processing unit 19 determines that the average value Av2 of the output signal of the vibration sensor 12 is greater than the threshold value B2. (p) The central processing unit 19 determines that the amount of change dSn of the output signal of the vibration sensor 12 is greater than the threshold value B3. When the determination in step S122 results in YES as described above, the central processing unit 19 recognizes that the diagnosis target 2 is the B-rank in step S124.

When all of the following (q) (r) (s) (t) (u) (w) are established, the determination in step S122 in step S122 by the central processing unit 19 results in YES. In other words, the central processing unit 19 determines in step S122 that the event W1 is established and the event W2 is established. (q) The central processing unit 19 determines that the instantaneous value MaN of the output signal of the microphone 11 is less than or equal to the threshold value S1. (r) The central processing unit 19 determines that the average value Av2 of the output signal of the microphone 11 is less than or equal to the threshold value S2.
(s) The central processing unit 19 determines that the amount of change dMa of the output signal of the microphone 11 is less than or equal to the threshold value S3. (t) The central processing unit 19 determines that the instantaneous value SnN of the output signal of the vibration sensor 12 is less than or equal to the threshold value B1. (u) The central processing unit 19 determines that the average value Av2 of the output signal of the vibration sensor 12 is less than or equal to the threshold value B2.
(w) The central processing unit 19 determines that the amount of change dSn of the output signal of the vibration sensor 12 is less than or equal to the threshold value B3. When the determination in step S122 results in NO as described above, the central processing unit 19 recognizes that the diagnosis target 2 is the C-rank in step S125.

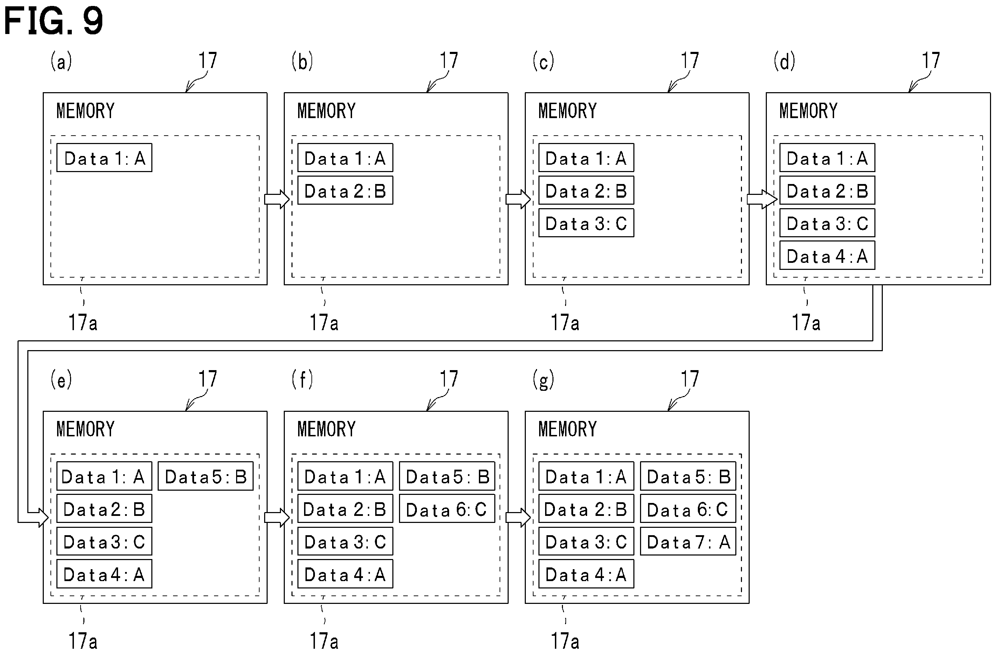

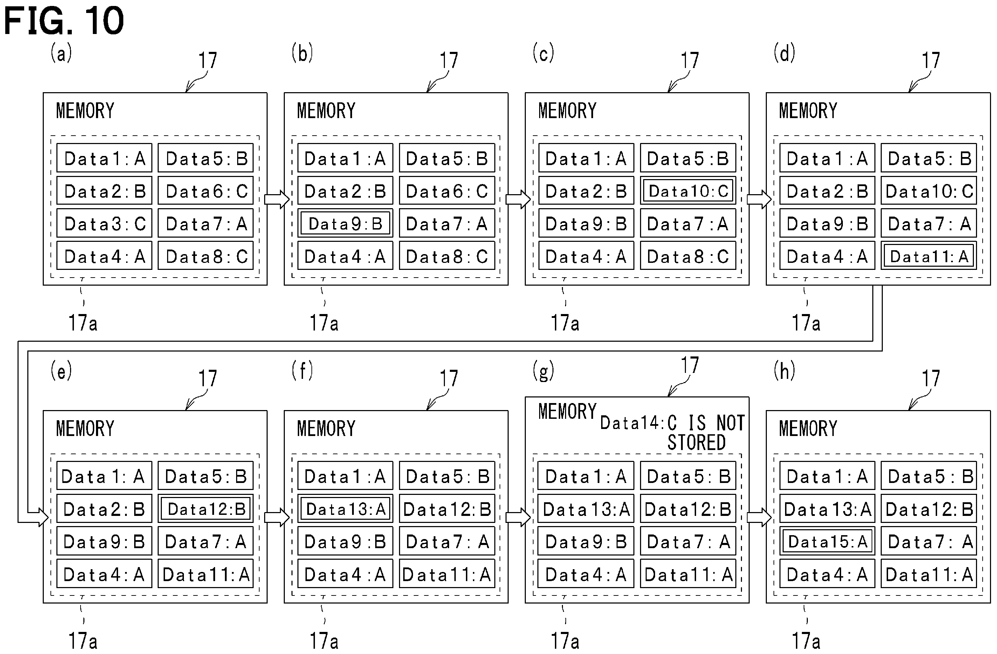

Next, a specific example where the central processing unit 19 stores the data and the rank in the data storage area 17a of the nonvolatile memory 17 in the present embodiment will be described with reference to FIGS. 9 and 10.

Part (a) of FIG. 9 shows a state in which, at a time of execution of the diagnostic process for the first time, there are the data, the rank, and the acquisition order information stored in the data storage area 17a. Part (b) of FIG. 9 shows a state in which, at a time of execution of the diagnostic process for the second time, there are the data, the ranks, and the acquisition order information stored in the data storage area 17a. Part (c) of FIG. 9 shows a state in which, at a time of execution of the diagnostic process for the third time, there are the data, the rank, and the acquisition order information stored in the data storage area 17a.

Part (d) of FIG. 9 shows a state in which, at a time of execution of the diagnostic process for the fourth time, there are the data, the rank, and the acquisition order information stored in the data storage area 17a. Part (e) of FIG. 9 shows a state in which, at a time of execution of the diagnostic process for the fifth time, there are the data, the rank, and the acquisition order information stored in the data storage area 17a.

Part (f) of FIG. 9 shows a state in which, at a time of execution of the diagnostic process for the sixth time, there are the data, the rank, and the acquisition order information stored in the data storage area 17a. Part (g) of FIG. 9 shows a state in which, at a time of execution of the diagnostic process for the seventh time, there are the data, the rank, and the acquisition order information stored in the data storage area 17a.

Part (a) of FIG. 10 shows a state in which, at a time of execution of the diagnostic process for the eighth time, there are the data, the rank, and the acquisition order information stored in the data storage area 17a. Part (b) of FIG. 10 shows a state in which, at a time of execution of the diagnostic process for the ninth time, there are the data, the rank, and the acquisition order information stored in the data storage area 17a.

Part (c) of FIG. 10 shows a state in which, at a time of execution of the diagnostic process for the tenth time, there are the data, the rank, and the acquisition order information stored in the data storage area 17a. Part (d) of FIG. 10 shows a state in which, at a time of execution of the diagnostic process for the eleventh time, there are the data, the rank, and the acquisition order information stored in the data storage area 17a.

Part (e) of FIG. 10 shows a state in which, at a time of execution of the diagnostic process for the twelfth time, there are the data, the rank, and the acquisition order information stored in the data storage area 17a. Part (f) of FIG. 10 shows a state in which, at a time of execution of the diagnostic process for the thirteenth time, there are the data, the rank, and the acquisition order information stored in the data storage area 17a. Part (g) of FIG. 10 shows a state in which, at a time of execution of the diagnostic process for the fourteenth time, there are the data, the rank, and the acquisition order information stored in the data storage area 17a.

Part (h) of FIG. 10 shows a state in which, at a time of execution of the diagnostic process for the fifteenth time, there are the data, the rank, and the acquisition order information stored in the data storage area 17a. The numerals 1 to 15 added to respective Data in FIGS. 9 and 10 indicate the acquisition order information. The A, B, and C added to respective Data in FIGS. 9 and 10 indicate the rank.

First, as shown in part (a) of FIG. 9, the central processing unit 19 stores the data 1 acquired from the microphone 11 in the diagnostic process for the first time, the A-rank recognized in the diagnostic process for the first time, and the acquisition order information in the free area of the data storage area 17a.

Similarly, the central processing unit 19 stores the data 1 acquired from the vibration sensor 12 in the diagnostic process for the first time, the A-rank recognized in the diagnostic process for the first time, and the acquisition order information in the data storage area 17b.

Next, as shown in the part (b) of FIG. 9, the central processing unit 19 stores the data 2 acquired from the microphone 11 in the diagnostic process for the second time, the B-rank recognized in the diagnostic process for the second time, and the acquisition order information in the free area of the data storage area 17a.

Similarly, the central processing unit 19 stores the data 2 acquired from the vibration sensor 12 in the diagnostic process for the second time, the B-rank recognized in the diagnostic process for the second time, and the acquisition order information in the data storage area 17b.

Next, as shown in part (c) of FIG. 9, the central processing unit 19 stores the data 3 acquired from the microphone 11 in the diagnostic process for the third time, the C-rank recognized in the diagnostic process for the third time, and the acquisition order information in the free area of the data storage area 17a.

Similarly, the central processing unit 19 stores the data 3 acquired from the vibration sensor 12 in the diagnostic process for the third time, the C-rank recognized in the diagnostic process for the third time, and the acquisition order information in the data storage area 17b.

Next, as shown in the part (d) of FIG. 9, the central processing unit 19 stores the data 4 acquired from the microphone 11 in the diagnostic process for the fourth time, the A-rank recognized in the diagnostic process for the fourth time, and the acquisition order information in the free area of the data storage area 17a.

Similarly, the central processing unit 19 stores the data 4 acquired from the vibration sensor 12 in the diagnostic process for the fourth time, the A-rank recognized in the diagnostic process for the fourth time, and the acquisition order information in the data storage area 17b.

Next, as shown in part (e) of FIG. 9, the central processing unit 19 stores the data 5 acquired from the microphone 11 in the diagnostic process for the fifth time, the B-rank recognized in the diagnostic process for the fifth time, and the acquisition order information in the free area of the data storage area 17a.

Similarly, the central processing unit 19 stores the data 5 acquired from the vibration sensor 12 in the diagnostic process for the fifth time, the B-rank recognized in the diagnostic process for the fifth time, and the acquisition order information in the data storage area 17b.

Next, as shown in part (f) of FIG. 9, the central processing unit 19 stores the data 6 acquired from the microphone 11 in the diagnostic process for the sixth time, the C-rank recognized in the diagnostic process for the sixth time, and the acquisition order information in the free area of the data storage area 17a.

Similarly, the central processing unit 19 stores the data 6 acquired from the vibration sensor 12 in the diagnostic process for the sixth time, the C-rank recognized in the diagnostic process for the sixth time, and the acquisition order information in the data storage area 17b.

Next, as shown in the part (g) of FIG. 9, the central processing unit 19 stores the data 7 acquired from the microphone 11 in the diagnostic process for the seventh time, the A-rank recognized in the diagnostic process for the seventh time, and the acquisition order information in the free area of the data storage area 17a.

Similarly, the central processing unit 19 stores the data 7 acquired from the vibration sensor 12 in the diagnostic process for the seventh time, the A-rank recognized in the diagnostic process for the seventh time, and the acquisition order information in the data storage area 17b.

Next, as shown in part (a) of FIG. 10, the central processing unit 19 stores the data 8 acquired from the microphone 11 in the diagnostic process for the eighth time, the C-rank recognized in the diagnostic process for the eighth time, and the acquisition order information in the free area in the data storage area 17a.

Similarly, the central processing unit 19 stores the data 8 acquired from the vibration sensor 12 in the diagnostic process for the eighth time, the C-rank recognized in the diagnostic process for the eighth time, and the acquisition order information in the data storage area 17b.

Next, the central processing unit 19 acquires the data 9 from the microphone 11 in the diagnostic process for the ninth time and recognizes the B-rank in the diagnostic process for the ninth time. In this case, as shown in part (a) of FIG. 10, there is no free space in the data storage area 17a. Therefore, the central processing unit 19 stores the data 9, the B-rank, and the acquisition order information in the data storage area 17a by overwriting.

Specifically, among the A-rank, the B-rank, and the C-rank for each data stored in the data storage area 17a in part (a) of FIG. 10, the C-rank indicating the lowest abnormality degree is the lowest rank. In this case, each of the data 3, the data 6, and the data 8 used by the central processing unit in recognizing the diagnosis target 2 as the C-rank is the lowest rank data.

The data 9 acquired from the microphone 11 at the latest timing in execution of the diagnostic process for the ninth time is the latest data, and the B-rank recognized based on this latest data is the latest rank.

In this case, the central processing unit 19 determines that the B-rank being the latest rank indicates the abnormality degree higher than the C-rank being the lowest rank.

Therefore, the central processing unit 19 stores the data 9 in the data storage area 17a in place of the data 3 acquired at the oldest timing (i.e., the diagnostic process for the third time) among the data 3, the data 6, and the data 8.

In addition to this, the central processing unit 19 stores the B-rank being the latest B-rank in the data storage area 17a in place of the C-rank being the lowest rank. Furthermore, the central processing unit 19 stores the acquisition order information for data 9 in the data storage area 17a in place of the acquisition order information of the data 3.

Because of this, the data 9, the B-rank, and the acquisition order information are stored in the data storage area 17a, as shown in part (b) of FIG. 9.

Similarly, the central processing unit 19 stores the data 9 acquired from the vibration sensor 12 in the diagnostic process for the ninth time, the B-rank recognized in the diagnostic process for the ninth time, and the acquisition order information in the data storage area 17b.

Next, the central processing unit 19 acquires the data 10 from the microphone 11 in the diagnostic process for the tenth time and recognizes the C-rank in the diagnostic process for the tenth time. In this case, as shown in part (b) of FIG. 10, there is no free space in the data storage area 17a. Therefore, the central processing unit 19 stores the data 10, the C-rank, and the acquisition order information in the data storage area 17a by overwriting.

Specifically, among the A-rank, the B-rank, and the C-rank for each data stored in the data storage area 17a in part (b) of FIG. 9, the C-rank indicating the lowest abnormality degree is the lowest rank. Each of the data 6 and the data 8 used by the central processing unit 19 in recognizing the C-rank is the lowest rank data.

The data 10 acquired from the microphone 11 at the latest timing in execution of the diagnostic process for the tenth time is the latest data, and the C-rank recognized based on this latest data is the latest rank.

In this case, the central processing unit 19 determines that the C-rank being the latest rank and the C-rank being the lowest rank match each other in terms of the abnormality degree.

Here, the central processing unit 19 stores the data 10 in the data storage area 17a in place of the data 6 acquired at the oldest timing (i.e., the diagnostic process for the sixth time) among the data 6 and data 8, which were acquired at the oldest timing.

In addition to this, the central processing unit 19 stores the C-rank being the latest rank in the data storage area 17a in place of the C-rank being the lowest rank. Furthermore, the central processing unit 19 stores the acquisition order information of the data 10 in the data storage area 17a in place of the acquisition order information of the data 6.

Because of this, the data 10, the C-rank, and the acquisition order information are stored in the data storage area 17a, as shown in part (c) of FIG. 10.

Similarly, the central processing unit 19 stores the data 10 acquired from the vibration sensor 12 in the diagnostic process for the tenth time, the C-rank recognized in the diagnostic process for the tenth time, and the acquisition order information in the data storage area 17b.

Next, the central processing unit 19 acquires the data 11 from the microphone 11 in the diagnostic process for the eleventh time and recognizes the A-rank in the diagnostic process for the eleventh time. In this case, as shown in part (c) of FIG. 10, there is no free space in the data storage area 17a. Therefore, the central processing unit 19 stores the data 11, the A-rank, and the acquisition order information in the data storage area 17a by overwriting.

Specifically, among the A-rank, the B-rank, and the C-rank for each data stored in the data storage area 17a in part (c) of FIG. 10, the C-rank indicating the lowest abnormality degree is the lowest rank. The data 8 used by the central processing unit 19 in recognizing the A-rank is the lowest rank data.

The data 11 acquired from the microphone11 at the latest timing in execution of the diagnostic process for the eleventh time is the latest data, and the A-rank recognized based on this latest data is the latest rank.

In this case, the central processing unit 19 determines that the A-rank being the latest rank indicates the abnormality degree higher than the C-rank being the lowest rank.

At this time, the central processing unit 19 stores the data 11 in the data storage area 17a in place of the data 8.

In addition to this, the central processing unit 19 stores the A-rank being the latest rank in the data storage area 17a in place of the C-rank being the lowest rank. Furthermore, the central processing unit 19 stores the acquisition order information of the data 11 in the data storage area 17a in place of the acquisition order information of the data 8.

Because of this, the data 11, the A-rank, and the acquisition order information are stored in the data storage area 17a, as shown in part (d) of FIG. 10.

Similarly, the central processing unit 19 stores the data 11 acquired from the vibration sensor 12 in the diagnostic process for the eleventh time, the A-rank recognized in the diagnostic process for the eleventh time, and the acquisition order information in the data storage area 17b.

Next, the central processing unit 19 acquires the data 12 from the microphone 11 in the diagnostic process for the twelfth time and recognizes the B-rank in the diagnostic process for the twelfth time. In this case, as shown in part (d) of FIG. 10, there is no free space in the data storage area 17a. Therefore, the central processing unit 19 stores the data 12, the B-rank, and the acquisition order information in the data storage area 17a by overwriting.

Specifically, among the A-rank, the B-rank, and the C-rank for each data stored in the data storage area 17a in part (d) of FIG. 10, the lowest rank indicating the lowest abnormality degree is the C-rank. The data 10 used by the central processing unit 19 in recognizing the C-rank is the lowest rank data.

The data12 acquired from the microphone 11 at the latest timing in execution of the diagnostic process for the twelfth time is the latest data, and the B-rank recognized based on this latest data is the latest rank.

In this case, the central processing unit 19 determines that the B-rank being the latest rank indicates the abnormality degree higher than the C-rank being the lowest rank.

Here, the central processing unit 19 stores the data 12 being the latest data, data 12 in the data storage area 17a in place of the data 10 being the lowest rank data.

In addition to this, the central processing unit 19 stores the B-rank being the latest rank in the data storage area 17a in place of the C-rank being the lowest rank. Furthermore, the central processing unit 19 stores the acquisition order information of the data 12 in the data storage area 17a in place of the acquisition order information of the data 10.

Because of this, the data 12, the B-rank, and the acquisition order information are stored in the data storage area 17a in part (e) of FIG. 10.

Similarly, the central processing unit 19 stores the data 12 acquired from the vibration sensor 12 in the diagnostic process for the twelfth time, the B-rank recognized in the diagnostic process for the twelfth time, and the acquisition order information in the data storage area 17b.

Next, the central processing unit 19 acquires the data 13 from the microphone 11 in the diagnostic process for the thirteenth time and recognizes the A-rank in the diagnostic process for the thirteenth time. In this case, as shown in part (e) of FIG. 10, there is no free space in the data storage area 17a. Therefore, the central processing unit 19 stores the data 13, the A-rank, and the acquisition order information in the data storage area 17a by overwriting.

Specifically, among the A-rank and the B-rank stored in the data storage area 17a in part (e) of FIG. 10, the lowest rank indicating the lowest abnormality degree is the B-rank. Each of the data 2, 5, 9, and 12 used by the central processing unit 19 in recognizing the B-rank is the lowest rank data.

The data 13 acquired from the microphone 11 in execution of the diagnostic process for the thirteenth time is the latest data, and the A-rank recognized based on this latest data is the latest rank.

At this time, the central processing unit 19 determines that the A-rank being the latest rank indicates the abnormality degree higher than the B-rank being the lowest rank.

In this case, the central processing unit 19 stores the data 13 being the latest data in the data storage area 17a in place of the data 2 acquired at the oldest timing (i.e., the diagnostic process for the second time) from the microphone 11 among the data 2, 5, 9, and 12.

In addition to this, the central processing unit 19 stores the A-rank being the latest rank in the data storage area 17a in place of the B-rank being the lowest rank. Furthermore, the central processing unit 19 stores the acquisition order information of the data 13 in the data storage area 17a in place of the acquisition order information of the data 2.

Because of this, the data 13, the A-rank, and the acquisition order information are stored in the data storage area 17a in part (f) of FIG. 10.

Similarly, the central processing unit 19 stores the data 13 acquired from the vibration sensor 12 in the diagnostic process for the thirteenth time, the A-rank recognized in the diagnostic process for the thirteenth time, and the acquisition order information in the data storage area 17b.

Next, the central processing unit 19 acquires the data 14 from the microphone 11 in the diagnostic process for the fourteenth time and recognizes the C-rank in the diagnostic process for the fourteenth time.

Here, among the A-rank and the B-rank stored in the data storage area 17a in part (f) of FIG. 10, the lowest rank indicating the lowest abnormality degree is the B-rank. Each of the data 5, 9, and 12 used by the central processing unit 19 in recognizing the B-rank is the lowest rank data.

The data 14 acquired from microphone 11 at the latest timing in execution of diagnostic process for the fourteenth time is the latest data, and the C-rank recognized based on this latest data is the latest rank.

At this time, the central processing unit 19 determines that the C-rank being the latest rank indicates the abnormality degree lower than the B-rank being the lowest rank.

In this case, the central processing unit 19 does not store the data 14 being the latest data, data 14 in the data storage area 17a. Furthermore, the central processing unit 19 does not store the acquisition order information of the data 14 in the data storage area 17a.

In addition to this, the central processing unit 19 does not store the C-rank being the latest rank in the data storage area 17a.

As a result, the data 14, the C-rank, and the acquisition order information are not stored in the data storage area 17a, as shown in part (g) of FIG. 10.

Similarly, the central processing unit 19 does not store the data 14 acquired from the vibration sensor 12 in the diagnostic process for the fourteenth time, the C-rank recognized in the diagnostic process for the fourteenth time, and the acquisition order information in the data storage area 17b.

Next, the central processing unit 19 acquires the data 15 from the microphone 11 in the diagnostic process for the fifteenth time and recognizes the A-rank in the diagnostic process for the fifteenth time. In this case, as shown in part (g) of FIG. 10, there is no free space in the data storage area 17a. Therefore, the central processing unit 19 stores the data 15, the A-rank, and the acquisition order information in the data storage area 17a by overwriting.

Specifically, among the A-rank and the B-rank stored in the data storage area 17a in part (g) of FIG. 10, the lowest rank indicating the lowest abnormality degree is the B-rank. The data 9, 12 used by the central processing unit 19 in recognizing the B-rank is the lowest rank data.

The data 15 acquired from the microphone 11 at the latest timing in execution of the diagnostic process for the fifteenth time is the latest data, and the B-rank recognized based on this latest data is the latest rank.

In this case, the central processing unit 19 determines that the A-rank being the latest rank indicates the abnormality degree higher than the B-rank being the lowest rank.

Here, the central processing unit 19 stores the data 15 in the data storage area 17a in place of the data 9 acquired at the oldest timing (i.e., the diagnostic process for the ninth time) among the data 9 and the data 12.

In addition to this, the central processing unit 19 stores the A-rank being the latest rank in the data storage area 17a in place of the B-rank being the lowest rank. Furthermore, the central processing unit 19 stores the acquisition order information of the data 15 in the data storage area 17a in place of the acquisition order information of the data 9.

Because of this, the data 15, the A-rank, and the acquisition order information are stored in the data storage area 17a in part (h) of FIG. 10.

Similarly, the central processing unit 19 stores the data 15 acquired from the vibration sensor 12 in the diagnostic process for the fifteenth time, the A-rank recognized in the diagnostic process for the fifteenth time, and the acquisition order information in the data storage area 17b.

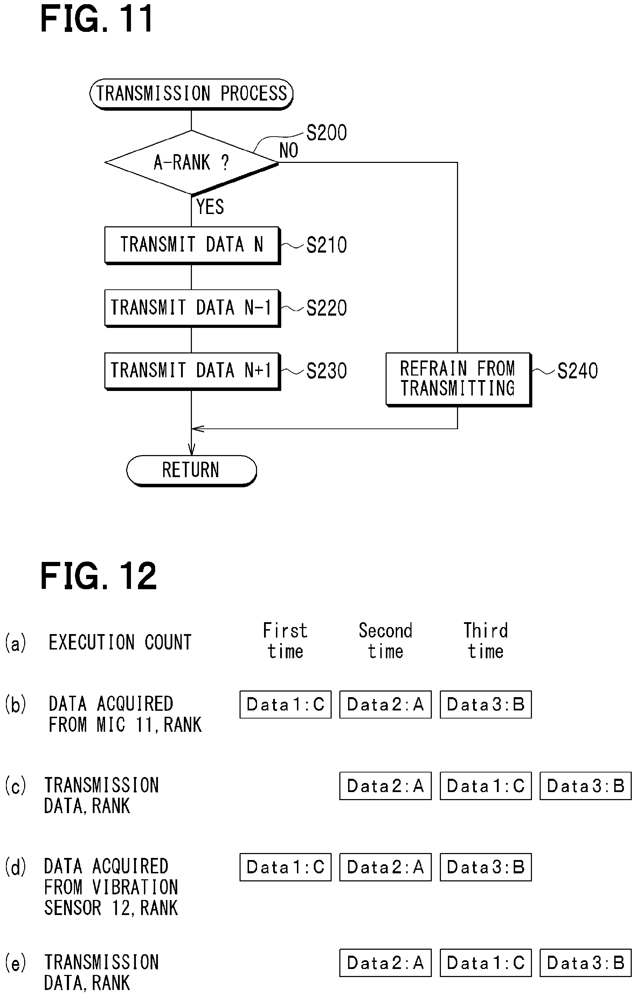

Next, a specific example where the central processing unit 19 transmits the data in the data storage area 17a, 17b to the server 20 will be described with reference to FIG. 11 and FIG. 12.

For illustrative purpose, N-1, N, and N+2 denote integers indicative of an execution count of the diagnostic process, specifically, an execution count of step S100. The data acquired from the sensor 11, 12 in step S100 for the N-th time is referred to as data N.

The data acquired from the sensor 11, 12 in step S100 for the (N-1)-th time is referred to as data N-1. The data acquired from the sensor 11, 12 in step S100 for the (N+1)-th time is referred to as data N+1.

FIG. 11 is a flowchart showing details of the transmission process in step S160 by the central processing unit 19 The central processing unit 19 executes the transmission process for the N-th time according to the flowchart in FIG. 11.

First, in step S200, the central processing unit 19 reads the rank recognized in the diagnostic process for the N-th time from the data storage area 17a.

In step S200, the central processing unit 19 determines whether or not the rank recognized in the diagnostic process for the N-th time is the A-rank, based on the rank read from the data storage area 17a.

At this time, when the rank recognized in the diagnostic process for the N-th time is the A-rank (i.e., highest rank), the determination in step S200 by the central processing unit 19 results in YES as the data N is A-rank data (i.e., high rank data). Here, the A-rank data is the data used in recognizing the A-rank of the diagnosis target 2 in step 120, S130.

Accordingly, the central processing unit 19 reads the data N and its acquisition order information from the data storage area 17a in step S210 and transmits the data N together with the rank and the acquisition order information to the server 20 through the communication unit 16.

In the server 20, the central processing unit 21 then receives the data N, the rank, and the acquisition order information via the communication unit 22, and stores the received data N, rank, and acquisition order information in the memory 23.

Next, the central processing unit 19 reads the data N-1 together with the rank and the acquisition order information from the data storage area 17a in step S220. The rank is the rank recognized in the diagnostic process for the (N-1)-th time, and the acquisition order information is information indicating in which order the data N-11 was acquired from microphone 11.

Accordingly, the central processing unit 19 transmits the data N-1, the rank, and the acquisition order information to the server 20 via the communication unit 16.

In the server 20, the central processing unit 21 then receives the data N-1, the rank, and the acquisition order information via the communication unit 22, and stores the received data N-1, rank, and acquisition order information in the memory 23.

Next, in step S230, the central processing unit 19 reads the data N+1 from the data storage area 17a together with the rank and the acquisition order information. The rank is the rank recognized in the diagnostic process for the (N+1)-th time, and the acquisition order information is information indicating n which order the data N+1 was acquired from the microphone 11.

The central processing unit 19 then transmits the data N+1, the rank, and the acquisition order information to the server 20 through the communication unit 16.

In the server 20, the central processing unit 21 then receives the data N+1, the rank, and the acquisition order information via the communication unit 22, and stores the received data N+1, rank, and acquisition order information in the memory 23.

In step S200 above, when the rank recognized in the diagnostic process for the N-th time is the B-rank, the determination by the central processing unit 19 results in NO.

In step S200 above, when the rank recognized in the diagnostic process for the N-th time is the C-rank, the determination by the central processing unit 19 results in NO.

As described, when the rank recognized in the diagnostic process for the N-th time is the B-rank or the C-rank in step S200 and the determination results in NO, the central processing unit 19 refrains from transmitting the data N, the rank, and the acquisition order information to the server 20 in the next step S240.

That is, when the data N is the C-rank data or the B-rank data, the determination in step S200 results in NO, so that in step S240, the central processing unit 19 refrains from transmitting the data N, the rank, and the acquisition order information to the server 20.

Next, a specific example in the present embodiment where the data acquired from the sensor 11, 12 is transmitted by the central processing unit 21 to the server 20 will be described with reference to FIG. 12.

Part (a) of FIG. 12 shows a count of execution of the diagnostic process by the central processing unit 21. Part (b) of FIG. 12 shows the data acquired by the central processing unit 21 from the microphone 11, the rank, and the acquisition order information. Part (c) of FIG. 12 shows the data, the rank, and the acquisition order information transmitted by the central processing unit 21. Part (d) of FIG. 12 shows the data acquired by the central processing unit 21 from the vibration sensor 12. Part (e) of FIG. 12 shows the data, the rank, and the acquisition order information transmitted by the central processing unit 21.

First, as shown in parts (a), (b), and (c) of FIG. 12, the central processing unit 21 acquires the data 1 from each sensor 11, 12 in the diagnostic process for the first time. At this time, the central processing unit 21 recognizes that the diagnosis target 2 is the C-rank, based on the sensor-by-sensor data 1 acquired from the sensors 11 and 12. In this case, the central processing unit 21 determines not to transmit the sensor-by-sensor data 1, the rank, and the acquisition order information via the communication unit 16.

Next, the central processing unit 21 acquires the data 2 from each sensor 11, 12 in the diagnostic process for the second time. At this time, the central processing unit 21 recognizes that the diagnosis target 2 is the A-rank based on the sensor-by-sensor data 2 acquired from the sensors 11 and 12.

In this case, the central processing unit 11 transmits, on a sensor-by-sensor basis, the data 2, the A-rank, and the acquisition order information to the server 20 from the communication unit 16. Along with this, the central processing unit 11 transmits, on a sensor-by-sensor basis, the data 1, the C-rank, and the acquisition order information to the server 20 from the communication unit 16.

Next, the central processing unit 21 acquires the data 3 from each sensor 11, 12 in the diagnostic process for the third time. At this time, the central processing unit 21 recognizes that the diagnosis target 2 is the B-rank based on the sensor-by-sensor data 3 acquired from the sensors 11 and 12. The central processing unit 21 then transmits on a sensor-by-sensor basis, the data 3, the B-rank, and the acquisition order information to the server 20 from the communication unit 16.

According to the present embodiment described above, the diagnostic device 10 includes the nonvolatile memory 17 for storing the data and the sensor 11 to 15 for detecting the state of the diagnosis target 2. The central processing unit 19 is provided with a step S100 of repeatedly acquiring, on a sensor-by-sensor basis, the data indicating the state of the diagnosis target 2 detected by the sensor 11 to 15.

The central processing unit 19 is provided with steps S120 and S130 of repeatedly recognizing the rank indicating the degree to which the diagnosis target 2 is abnormal based on the data for each sensor acquired in step S100.

The central processing unit 19 is provided with steps S150A, S150B, S152A, and S152B of repeatedly storing, on a sensor-by-sensor basis, the data acquired in step S100 in the data storage area 17a, 17b, 17c, 17d together with the rank and the acquisition order information.

Among the multiple ranks stored in data storage area 17a, 17b, 17c, 17d, the rank with the lowest abnormality degree is the lowest rank. The acquisition order information is information indicating in which order the data is acquired by the central processing unit 19 in step S100.

Here, the data used in recognizing the lowest rank in step S120, S130 is the lowest rank data. The data acquired at the latest timing in step S100 is the latest data, and the rank recognized in step S120, S130 based on the latest data is the latest rank.

The central processing unit 19 is provided with steps S151A and S151B of determining whether either one of the followings is established: the latest rank indicates the abnormality degree higher than the lowest rank; the latest rank and the lowest rank match each other in terms of the abnormality degree.

When it is determined that the either one is established, the central processing unit 19 stores the latest data in the data storage area 17a to 17d in place of the lowest rank data (i.e., low-protection-priority data) as the low-protection-priority data is present. The low-protection-priority data is data indicating the lower protection priority lower than the latest data.

Therefore, it is possible to suppress an increase in storage capacity of the data storage area 17a, 17b, 17c, 17d, and 17e of the nonvolatile memory 17. Because of this, it is possible to reduce the cost of the diagnostic device 10.

The present embodiment with the above configuration provides the following operational effects (1), (2), (3), (4), (5), (6), (7).
(1) The central processing unit 19 recognizes the rank of the diagnosis target 2 based on multiple data acquired from the sensors 11 to 15. This improves rank accuracy.
(2) For example, when multiple lowest-rank data are stored in the data storage area 17a to 17d in the data storage area 17a, the central processing unit 19 stores the latest data in the data storage area 17a as follows.

Specifically, the central processing unit 19 stores the latest data in the data storage area 17a in place of the lowest rank data acquired in step S100 at the oldest timing among the multiple lowest rank data.

Here, the lowest rank data acquired in step S100 at the oldest timing among the multiple lowest rank data is of least importance in terms of analyzing the state of the diagnosis target 2 among the multiple lowest rank data.

Because of this, the latest data is stored in the data storage area 17a in place of the least important data. Because of this, while suppressing an increase in storage capacity of the data storage area 17a of the nonvolatile memory 17, it is possible to store the important data for analyzing the state of the diagnosis target 2.
(3) Upon determining that the either one is established as described above, the central processing unit 19 stores, on a sensor-by-sensor basis, the latest rank in the data storage area 17a to 17e of the nonvolatile memory 17 in step S152A, S152B in place of the lowest rank.

Because of this, while suppressing an increase in storage capacity of the data storage area 17a of the nonvolatile memory 17, it is possible to store the important data for analyzing the state of the diagnosis target 2.
(4) Upon determining that the either one is established in step 152A, S152B as described above, the central processing unit 19 store the acquisition order information of the latest data in the data storage area 17a to 17e in place of the data acquisition order information of the lowest rank.

Because of this, while suppressing an increase in storage capacity of the data storage area 17a of the nonvolatile memory 17, it is possible to store the acquisition order information of the latest data, which is important for analyzing the state of the diagnosis target 2.
(5) The central processing unit 19 is provided with step S160 of transmitting, on a sensor-by-sensor basis, the data, the rank, and the acquisition order information to the server 20 from the communication unit 16 so that for each sensor, the data, the rank and the acquisition order information are stored in the server 20.

Because of this, the server 20 also can store the data, the rank, and the acquisition order information for each sensor. For this reason, the server 20 also can analyze the state of the diagnosis target 2.
(6) Upon recognizing the B-rank or the C-rank (i.e., low rank) based on the data of the respective sensors, the central processing unit 19 refrains from transmitting, on a sensor-by-sensor basis, the data, the rank, and the acquisition order information to the server 20.

Upon recognizing the A-rank (i.e., high rank) based on the data of the respective sensors, the central processing unit 19 transmits, on a sensor-by-sensor basis, the data, the rank, and the acquisition order information to the server 20.

Because of this, when the A-rank is recognized based on the data of the respective sensors, the central processing unit 19 transmits the data to the server 20 preferentially over when the B-rank or the C-rank is recognized based on the data for each sensor.

Therefore, while suppressing communication resource between the diagnostic device 10 and the server 20, the important data for the server 20 to analyze the state of the diagnosis target 2 can be transmitted to the server 20. This improves the diagnostic system 1 in terms of noise resistance and energy-saving.

(7) Upon recognizing the A-rank based on the data N acquired from the sensor 11, 12, the central processing unit 19 transmits the data N-1 and the data N+1 to the serve 20 in addition to the data N regardless of the ranks recognized based on the data N-1 and the data N+1.

Therefore, upon recognizing the A-rank based on the data N acquired from the sensor 11, 12, the central processing unit 19 can transmit the data N-1 and the data N+1 to the server 20 which are important for the server 20 to analyze the state of the diagnosis target 2.

### (Second embodiment).

In the first embodiment described above, upon recognizing the B-rank of the diagnosis target 2, the central processing unit 19 refrains from transmitting the B-rank data used in recognizing the B-rank to the server 20.

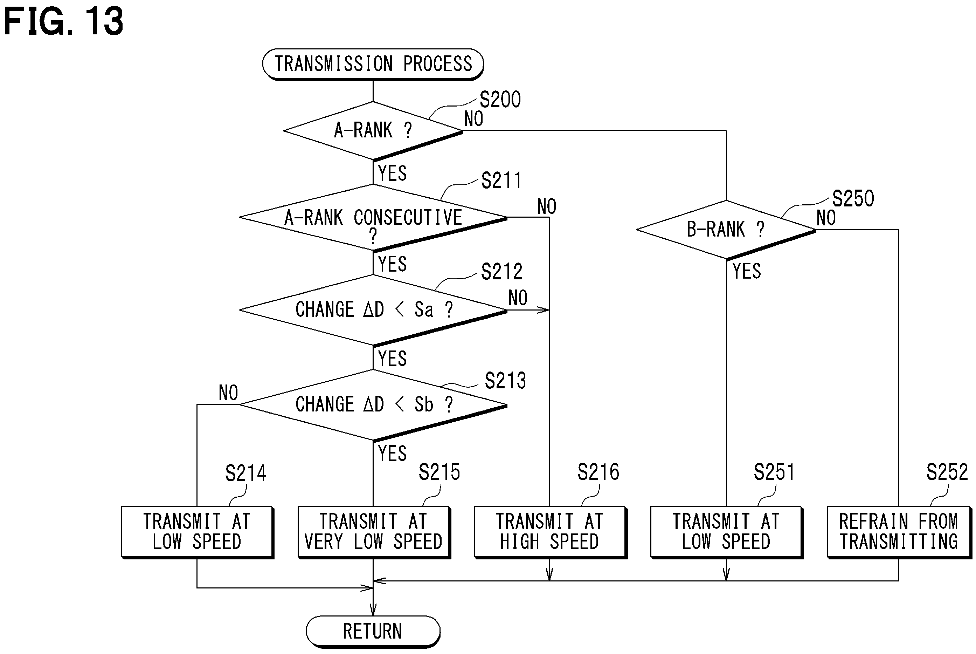

The second embodiment illustrates an alternative example with reference to FIG. 13, wherein the alternative example is such that when the B-rank is recognized, the central processing unit 19 in this second embodiment transmits the data to the server 20 at a lower communication speed than when the A-rank is recognized. FIG. 13 is a flowchart showing the details of the transmission process by the central processing unit 19.

The present embodiment and the first embodiment above differ in the transmission process by the central processing unit 19. Therefore, the following describes mainly the transmission process by the central processing unit 19.

The central processing unit 19 in the present embodiment executes the transmission process according to the flowchart in FIG. 13 instead of the flowchart in FIG. 11. Let N-1 and N be a count of execution of the diagnostic process in FIG. 4, i.e., a count of execution of the transmission process in FIG. 13. The transmission process executed for the N-th time by the central processing unit 19 will be described below.

First, in step S200, the central processing unit 19 reads the rank recognized in the diagnostic process for the N-th time from the data storage area 17a, and based on this read rank, determines whether or not the rank recognized in the diagnostic process for the N-th time is the A-rank.

At this time, when the rank recognized in the diagnostic process for the N-th time is the A-rank, the determination in step S200 by the central processing unit 19 results in YES.

Next, in step S210, the central processing unit 19 reads the rank recognized in the diagnostic process for the (N-1)-th time from the data storage area 17a, and based on this read rank, determines whether or not the rank recognized in the diagnostic process for the (N-1)-th time is the A-rank.

At this time, when the rank recognized in the diagnostic process for the (N-1)-th time is the A-rank, the determination in step S200 by the central processing unit 19 results in YES. This indicates that the data N and the data N-1 are each the A-rank data.

In the next step S212, the central processing unit 19 reads the acquisition order information for each of the data N, the data N-1, and the data N, N-1 from the data storage area 17a. The central processing unit 19 as a first determination unit determines whether or not an amount of change ΔD being the absolute value of the difference between the data N and the data N-1 is less than a threshold value Sa.

When the amount of change ΔD is less than the threshold value Sa (i.e., a first threshold value), the determination in step S212 by the central processing unit 19 results in YES.

Next, in step S213, the central processing unit 19 as a second determination unit determines whether or not the amount of change ΔD is less than a threshold value Sb. The threshold value Sb is smaller than the threshold value Sa.

When the amount of change ΔD is less than the threshold value Sb (i.e., second threshold value), the determination in step S213 by the central processing unit 19 results in YES. Accordingly, in step S215, the central processing unit 19 transmits the data N acquired in step S100 for the N-th time, the rank, and the acquisition order information to the server 20 from the communication unit 16 at an extremely low communication speed.

When the amount of change ΔD is greater than or equal to the threshold value Sb, the determination in step S213 by the central processing unit 19 results in NO. In step S214, the central processing unit 19 transmits the data N, the rank, and acquisition order information to the server 20 from the communication unit 16 at a low speed.

When the rank recognized in the diagnostic process for the (N-1)-th time is either one of the B-rank and the C-rank, the determination in step S211 by the central processing unit 19 results in NO.

Accordingly, in step S216, the central processing unit 19 transmits the data N acquired in the step S100 for the N-th time, the rank, and the acquisition order information to the server 20 from the communication unit 16 at a high communication speed.

When the amount of change ΔD is greater than or equal to the threshold value Sa, the determination in step S212 by the central processing unit 19 results in NO. Accordingly, in step S216, the central processing unit 19 transmits the data N acquired in the step S100 for the N-th time, the rank, and the acquisition order information to the server 20 from the communication unit 16 at a high communication speed.

Furthermore, when the rank recognized in the diagnostic process for the N-th time is the rank- B or the rank-C, the determination in step S200 by the central processing unit 19 results in NO. Next, in step S250, the central processing unit 19 determines whether or not the rank recognized in the diagnostic process for the N-th time is the B-rank.

At this time, when the rank recognized in the diagnostic process for the N-th time is the B-rank, the determination in step S250 by the central processing unit 19 results in YES. Accordingly, in step S251, the central processing unit 19 transmits the data N acquired in step S100 for the N-th time, the B-rank, and the acquisition order information to the server 20 from the communication unit 16 at a lower communication speed.

At this time, the central processing unit 19 transmits the data, the rank, and the acquisition order information from the communication unit 16 to the server 20 at a lower communication speed than when the central processing unit 19 in step S216 transmits the data, the rank, and the acquisition order information from the communication unit 16 to the server 20.

When the rank recognized in the diagnostic process for the N-th time is the C-rank, the determination in step S250 by the central processing unit 19 results in NO. Accordingly, the central processing unit 19 refrains from transmitting the data N in step S252.

In the present embodiment, the communication speed in step S216 is higher than the communication speed in step S214, S251. The communication speed in each of step S214 and step S251 is higher than the communication speed in step S215.

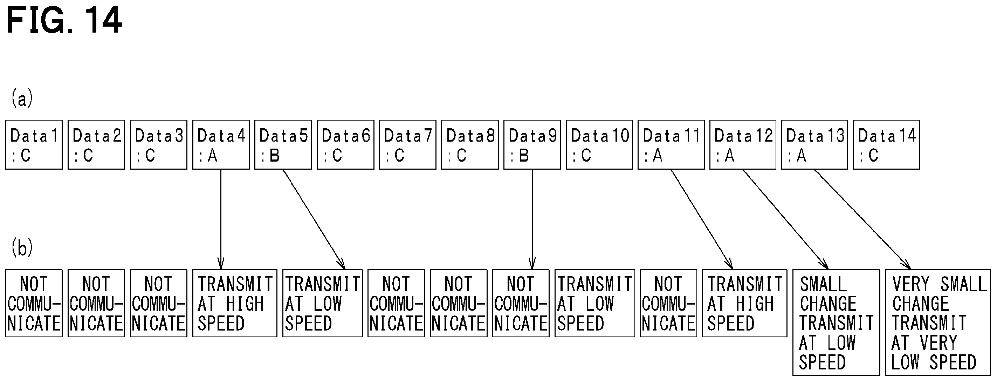

Next, a specific example of the transmission process by the central processing unit 19 in the present embodiment will be described with reference to FIG. 14. Part (a) of FIG. 14 illustrates that a series of data each acquired by the central processing unit 19 in step S100 of FIG. 4 are arranged in a chronological order by way of specific example. Part (b) of FIG. 14 illustrates that a series of data each transmitted by the central processing unit 19 in step S160 of FIG. 4 are arranged in a chronological order by way of specific example.

First, upon acquiring data 1 in the step S100 for the first time, the central processing unit 19 recognizes the diagnosis target 2 as the C-rank. In this case, the central processing unit 19 refrains from transmitting the data 1 to the server 20.

Next, upon acquiring the data 2 in the step S100 for the second time, the central processing unit 19 recognizes the diagnosis target 2 as the C-rank. In this case, the central processing unit 19 refrains from transmitting the data 2 to the server 20.

Next, upon acquiring the data 3 in the step S100 for the third time, the central processing unit 19 recognizes the diagnosis target 2 as the C-rank. In this case, the central processing unit 19 refrains from transmitting the data 3 to the server 20.

Next, upon acquiring the data 4 in step S100 for the fourth time, the central processing unit 19 recognizes the diagnosis target 2 as the A-rank. In this case, in step S216, the central processing unit 19 transmits the data 4, the rank, and the acquisition order information from the communication unit 16 to the server 20 at a high communication speed.

Next, upon acquiring the data 5 in step S100 for the fifth time, the central processing unit 19 recognizes the diagnosis target 2 as the B-rank. In this case, in step S251, the central processing unit 19 transmits the data 5, the rank, and the acquisition order information from the communication unit 16 to the server 20 at a low communication speed.

Next, upon acquiring the data 6 in step S100 for the sixth time, the central processing unit 19 recognizes the diagnosis target 2 as the C-rank. In this case, the central processing unit 19 refrains from transmitting the data 6 to the server 20.

Next, upon acquiring the data 7 in step S100 for the seventh time, the central processing unit 19 recognizes the diagnosis target 2 as the C-rank. In this case, the central processing unit 19 refrains from transmitting the data 7 to the server 20.

Next, upon acquiring the data 8 in step S100 for the eighth time, the central processing unit 19 recognizes the diagnosis target 2 as the C-rank. In this case, the central processing unit 19 refrains from transmitting the data 8 to the server 20.

Next, upon acquiring the data 9 in step S100 for the ninth time, the central processing unit 19 recognizes the diagnosis target 2 as the B-rank. In this case, in step S251, the central processing unit 19 transmits the data 9, the rank, and the acquisition order information from the communication unit 16 to the server 20 at a low communication speed.

Next, upon acquiring the data 10 in step S100 for the tenth time, the central processing unit 19 recognizes the diagnosis target 2 as the C-rank. In this case, the central processing unit 19 refrains from transmitting the data 10 to the server 20.

Next, upon acquiring the data 11 in step S100 for the eleventh time, the central processing unit 19 recognizes the diagnosis target 2 as the A-rank. In this case, in step S216, the central processing unit 19 transmits the data 11, the rank, and the acquisition order information from the communication unit 16 to the server 20 at a high communication speed.

Next, upon acquiring the data 12 in step S100 for the twelfth time, the central processing unit 19 recognizes the diagnosis target 2 as the A-rank. In this case, the amount of change ΔD of the data 12 relative to the data 11 is less than the threshold value S1 and the amount of change ΔD is greater than or equal to the threshold value S2. Therefore, in step S214, the central processing unit 19 transmits the data 10, the rank, and the acquisition order information from the communication unit 16 to the server 20 at a low communication rate.

Next, upon acquiring the data 13 in step S100 for the thirteenth time, the central processing unit 19 recognizes the diagnosis target 2 as the A-rank. In this case, the amount of change ΔD of the data 13 relative to the data 121 is less than the threshold value S2. In this case, in step S215, the central processing unit 19 transmits the data 13, the rank, and the acquisition order information from the communication unit 16 to the server 20 at an extremely low communication speed.

Next, upon acquiring the data 14 in step S100 for the fourteenth time, the central processing unit 19 recognizes the diagnosis target 2 as the C-rank. In this case, the central processing unit 19 refrains from transmitting the data 14 to the server 20.

According to the present embodiment described above, the central processing unit 19 stores, on a sensor-by-sensor basis, the latest data acquired at the latest timing in step S100 in the data storage area 17a to 17e of the nonvolatile memory 17 in place of the low-protection-priority data.

In addition to this, the central processing unit 19 stores the latest rank in the data storage area 17a to 17e in place of the lowest rank. Furthermore, the central processing unit 19 stores the acquisition order information of the latest data in the data storage area 17a to 17e in place of the acquisition order information of the low-protection-priority data.

Therefore, as in the first and second embodiments above, it is possible to suppress an increase in storage capacity of the data storage area 17a to 17e of the nonvolatile memory 17.

The present embodiment configured as described above provides the following operational effects (8) (9).
(8) When the A-rank is recognized, the central processing unit 19 transmits the data N, the rank, and the acquisition order information from the communication unit 16 to the server 20 at a higher communication speed than when the B-rank is recognized.

Because of this, When the A-rank is recognized, the central processing unit 19 preferentially transmits the data N, the rank, and the acquisition order information from the communication unit 16 to the server 20 as compared with when the B-rank is recognized.

Here, the data N when the B-rank of the diagnosis target 2 is recognized by the central processing unit 19 is of less importance for analyzing the state of the diagnosis target 2 than when the A-rank of the diagnosis target 2 is recognized.

Therefore, when the diagnosis target 2 is recognized as the B-rank, it is possible to reduce the communication resource between the diagnostic device 10 and the server 20 by lowering the communication speed as compared with when the diagnosis target 2 is recognized as the A-rank.

Therefore, while suppressing the communication resource between diagnostic device 10 and server 20, the important data for the server 20 to analyze the status of diagnostic device 10 can be transmitted to the server 20.
(9) When the amount of change ΔD of the data N relative to the data N-1 is less than the threshold value Sa, the central processing unit 19 transmits the data N, the rank, and the acquisition order information from the communication unit 16 to the server 20 at a lower communication speed than when the amount of change ΔD is greater than or equal to the threshold value Sa.

When the amount of change ΔD of the data N relative to the data N-1 is less than the threshold value Sb, the central processing unit 19 transmits the data N, the rank, and the acquisition order information from the communication unit 16 to the server 20 at an extremely low communication speed as compared with when the amount of change ΔD is greater than or equal to the threshold value Sb. The threshold value Sb is less than the threshold value Sa.

As seen from the above, the data N when the amount of change ΔD is greater than or equal to the threshold value Sa is of less importance for analyzing the state of the diagnosis target 2 than when the amount of change ΔD is less than the threshold value Sa. The data N when the amount of change ΔD is greater than or equal to the threshold value Sb is of less importance for analyzing the state of the diagnosis target 2 than when the amount of change ΔD is less than the threshold value Sb.

Therefore, by lowering the communication speed for the less important data N, it is possible to reduce the communication resource between the diagnostic device 10 and the server 20.

### (Third Embodiment).

The above second embodiment illustrates that the communication speed of data transmission from the communication unit 16 of the diagnostic device 10 to the communication unit 22 of the server 20 is changed according to the rank.

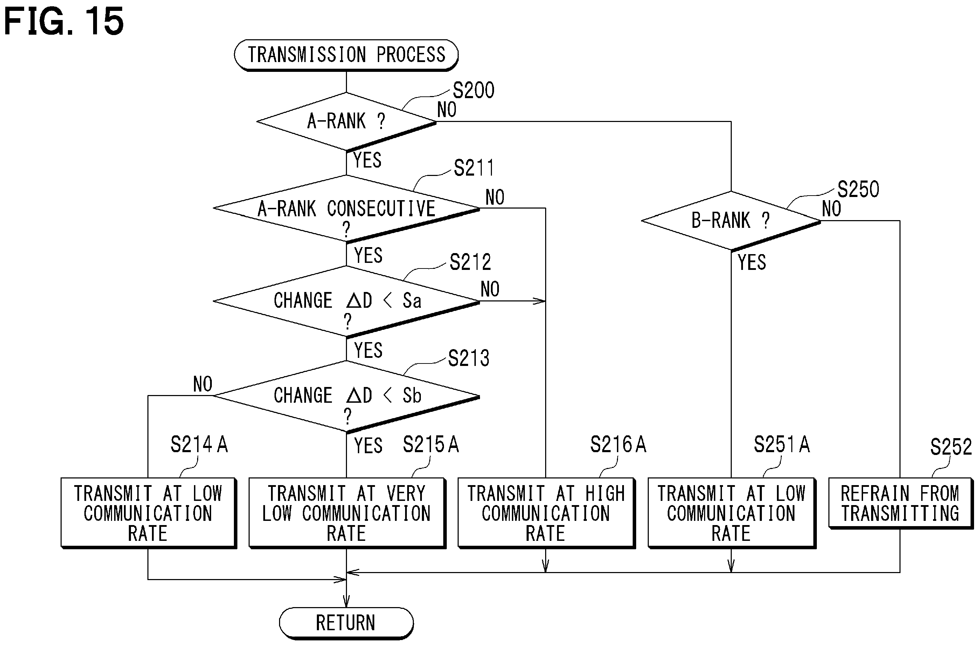

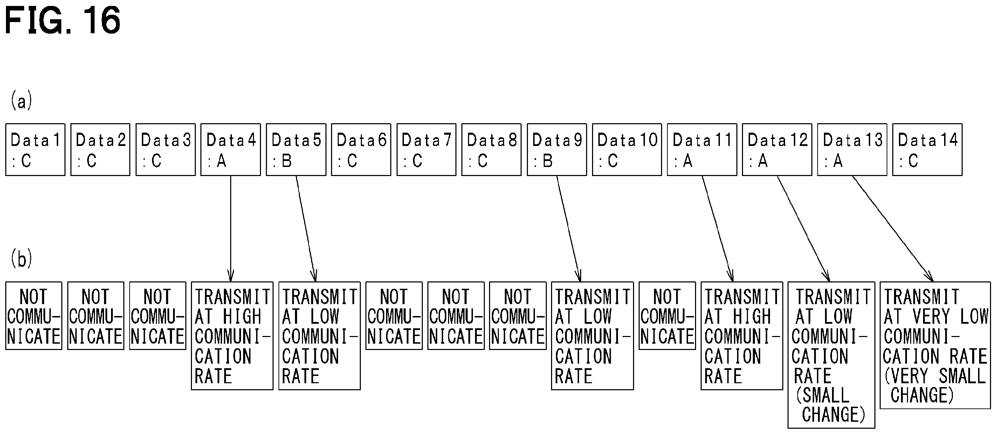

A third embodiment in which a communication rate in data transmission from the communication unit 16 of the diagnostic device 10 to the communication unit 22 of the server 20 is changed according to rank will be described with reference to FIG. 15 and FIG. 16. The communication rate is a transfer rate indicating an amount of data transmitted in unit time.

FIG. 15 is a flowchart showing details of the transmission process by the central processing unit 19. The central processing unit 19 executes the transmission process according to the flowchart in FIG. 15 in place of FIG. 13.

FIG. 15 includes step S214A in place of step S214, step S215A in place of step S215, step S216A in place of step S216, and step S251A in place of step S251 in FIG. 13.

When the amount of change ΔD is less than the threshold value Sb, the determination in step S213 by the central processing unit 19 results in YES. Accordingly, in step S215A, the central processing unit 19 transmits the data N acquired in step S100 for the N-th time, the rank, and the acquisition order information from the communication unit 16 to the server 20 at an extremely low communication rate.

When the amount of change ΔD is greater than or equal to the threshold value Sb, the determination in step S213 by the central processing unit 19 results in NO. Accordingly, in step S214A, the central processing unit 19 transmits the data N acquired in step S100 for the N-th time, the rank, and the acquisition order information from the communication unit 16 to the server 20 at a lower communication rate.

When the rank recognized in the diagnostic process for the (N-1)-th time is the B-rank or the C-rank, the determination in step S211 by the central processing unit 19 results in NO.

Accordingly, in step S216A, the central processing unit 19 transmits the data N acquired in step S100 for the N-th time, the A-rank, and the acquisition order information from the communication unit 16 to the server 20 at a high communication rate.

When the amount of change ΔD is greater than or equal to the threshold value Sa, the determination in step S212 by the central processing unit 19 results in NO. Accordingly, in step S216A, the central processing unit 19 transmits the data N acquired in step S100 for the N-th time, the A-rank, and the acquisition order information from the communication unit 16 to the server 20 at a high communication rate.

When the rank recognized in the diagnostic process for the N-th time is the B-rank, the determination in step S250 by the central processing unit 19 results in YES. Accordingly, in step S251A, the central processing unit 19 transmits the data N acquired in step S100 for the N-th time, the B-rank, and the acquisition order information from the communication unit 16 to the server 20 at a low communication rate.

In the present embodiment, the communication rate in step S216A is higher than the communication rate in step S214A, S251A. The communication rate in each of step S214A and S251A is higher than the communication rate in step S215A.

In the present embodiment, data density in transmission from the communication unit 16 to the server 20 in step S216A is 100% in terms of percentage. The data density in transmission from the communication unit 16 to the server 20 in step S214A and 251A is 50% in terms of percentage. The data density in transmission from the communication unit 16 to the server 20 in step S215A is 20% in terms of percentage.

Next, a specific example of the transmission process by the central processing unit 19 in the present embodiment will be described with reference to FIG. 16. Part (a) of FIG. 16 illustrates that a series of data each acquired by the central processing unit 19 in step S100 of FIG. 4 are arranged in a chronological order by way of specific example. Part (b) of FIG. 16 illustrates that a series of data each transmitted by the central processing unit 19 in step S160 of FIG. 4 are arranged in a chronological order by way of specific example.

FIG. 16 and FIG. 14 differ in transmission state of the data 4, 5, 9, 11, 12, 13. The following describes mainly the transmission state of the data 4, the data 5, the data 9, the data 11, the data 12, and the data 13.

First, upon acquiring the data 4 in step S100 for the fourth time, the central processing unit 19 recognizes the diagnosis target 2 as the A-rank. In this case, in step S216A, the central processing unit 19 transmits the data 4, the rank, and the acquisition order information from the communication unit 16 to the server 20 at a high communication rate.

Next, upon acquiring the data 5 in step S100 for the fifth time, the central processing unit 19 recognizes the diagnosis target 2 as the B-rank. In this case, in step S251A, the central processing unit 19 transmits the data 5, the rank, and the acquisition order information from the communication unit 16 to the server 20 at a low communication rate.

Next, upon acquiring the data 9 in step S100 for the ninth time, the central processing unit 19 recognizes the diagnosis target 2 as the B-rank. In this case, in step S251A, the central processing unit 19 transmits the data 9, the rank, and the acquisition order information from the communication unit 16 to the server 20 at a low communication rate.

Next, upon acquiring the data 11 in step S100 for the eleventh time, the central processing unit 19 recognizes the diagnosis target 2 as the A-rank. In this case, in step S216A, the central processing unit 19 transmits the data 11, the rank, and the acquisition order information from the communication unit 16 to the server 20 at a high communication rate.

Next, upon acquiring the data 12 in step S100 for the twelfth time, the central processing unit 19 recognizes the diagnosis target 2 as the A-rank. In this case, the amount of change ΔD of the data 12 relative to the data 11 is less than the threshold value S1 and the amount of change ΔD is greater than or equal to the threshold value S2.

Therefore, in step S214A, the central processing unit 19 transmits the data 10, the rank, and the acquisition order information from the communication unit 16 to the server 20 at a low communication rate.

Next, upon acquiring the data 13 in step S100 for the thirteenth time, the central processing unit 19 recognizes the diagnosis target 2 as the A-rank. In this case, the amount of change ΔD of the data 13 relative to the data 12 is less than the threshold value S2. In this case, in step S215, the central processing unit 19 transmits the data 13, the rank, and the acquisition order information from the communication unit 16 to the server 20 at an extremely low communication rate.

According to the present embodiment described above, the central processing unit 19 stores, on a sensor-by-sensor basis, the latest data acquired at the latest timing in step S100 in the data storage area 17a to 17e of the nonvolatile memory 17 in place of the low-protection-priority data.

In addition to this, the central processing unit 19 stores the latest rank in the data storage area 17a to 17e in place of the lowest rank. Furthermore, the central processing unit 19 stores the acquisition order information of the latest data in the data storage area 17a to 17e in place of the acquisition order information of the low-protection-priority data.

Therefore, as in the first and second embodiments above, it is possible to suppress an increase in storage capacity of the data storage area 17a to 17e of the nonvolatile memory 17.

The present embodiment configured as above provides the following operational effects (10) (11).
(10) When the A-rank is recognized, the central processing unit 19 transmits the data N, the rank, and the acquisition order information from the communication unit 16 to the server 20 at a higher communication rate than when the B-rank is recognized.

Because of this, when the A-rank is recognized, the central processing unit 19 preferentially transmits the data N, the rank, and the acquisition order information from the communication unit 16 to the server 20 as compared with when the B-rank is recognized.

Here, the data N when the B-rank of the diagnosis target 2 is recognized by the central processing unit 19 is of less importance for analyzing the state of the diagnosis target 2 than when the A-rank of the diagnosis target 2 is recognized.

Therefore, when the diagnosis target 2 is recognized as the B-rank, it is possible to reduce the communication resource between the diagnostic device 10 and the server 20 by lowering the communication rate as compared with when the diagnosis target2 is recognized as the A-rank.

Therefore, while suppressing the communication resource between diagnostic device 10 and server 20, the important data for the server 20 to analyze the status of diagnostic device 10 can be transmitted to the server 20.
(11) When the amount of change ΔD of the data N relative to the data N-1 is less than the threshold value Sa, the central processing unit 19 transmits the data N, the rank, and the acquisition order information from the communication unit 16 to the server 20 at a lower communication rate than when the amount of change ΔD is greater than or equal to the threshold value Sa.

When the amount of change ΔD of the data N relative to the data N-1 is less than the threshold value Sb, the central processing unit 19 transmits the data N, the rank, and the acquisition order information from the communication unit 16 to the server 20 at an extremely low communication rate as compared with when the amount of change ΔD is greater than or equal to the threshold value Sb. The threshold value Sb is less than the threshold value Sa.

Here, the data N when the amount of change ΔD is greater than or equal to the threshold value Sa is of less importance for analyzing the state of the diagnosis target2 than when the amount of change ΔD is less than the threshold value Sa. The data N when the amount of change ΔD is greater than or equal to the threshold value Sb is of less importance for analyzing the state of the diagnosis target2 than when the amount of change ΔD is less than the threshold value Sb.

Therefore, by lowering the communication rate for the less important data, it is possible to reduce the communication resource between the diagnostic device 10 and the server 20.

### (Fourth Embodiment).

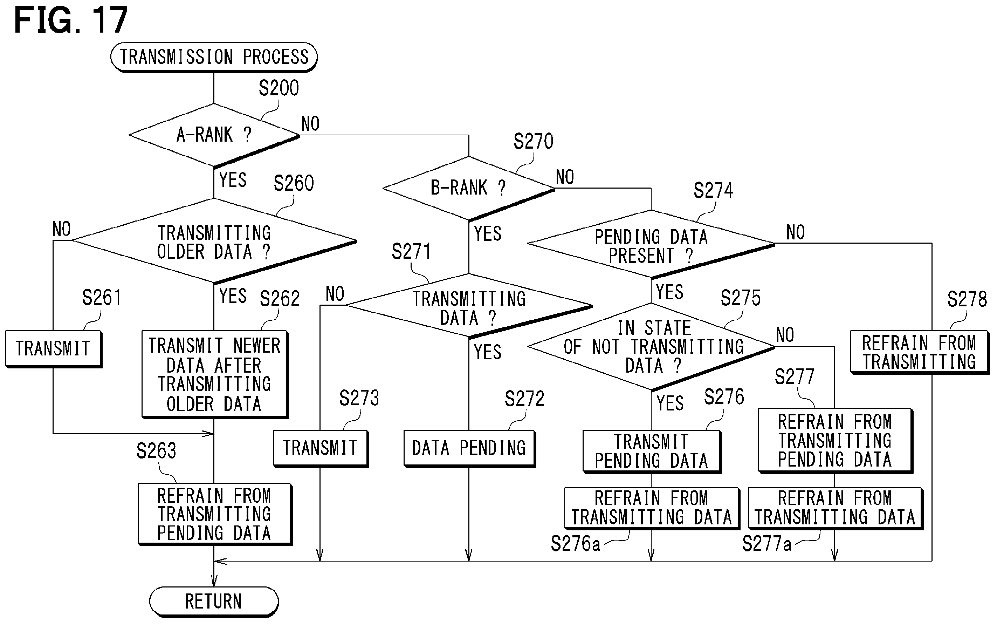

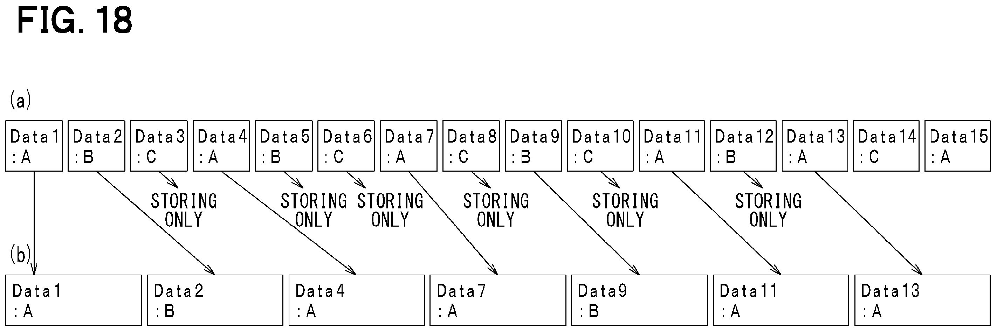

With reference to FIG. 17 and FIG. 18, a fourth embodiment will be described in which, by way of example, when the A-rank of the diagnosis target 2 is recognized based on the data 4 during the transmission of the data 2 in the first embodiment above, the central processing unit 19 transmits the data 4 to the server 20 after transmitting the data 2.

FIG. 17 is a flowchart showing details of the transmission process by the central processing unit 19 The present embodiment and the first embodiment above differ in the transmission process by the central processing unit 19. Therefore, the following will describe mainly the transmission process by the central processing unit 19.

The central processing unit 19 in the present embodiment executes the transmission process according to the flowchart in FIG. 17 instead of FIG. 11. For illustrative purpose, N, M, and L each denote a count of execution of the diagnostic process in FIG. 4, i.e., the transmission process in FIG. 17. M is an integer less than N, and L is an integer greater than N.

The data acquired in step S100 of the diagnostic process for the N-th time is referred to as data N, the data acquired in step S100 of the diagnostic process for the M-th time is referred to as data M, and the data acquired in step S100 of the diagnostic process for the L-th time is referred to as data L. The following will describe the transmission process for the L-th time executed by the central processing unit 19.

First, in step S200, the central processing unit 19 reads the rank recognized in the diagnostic process for the L-th time from the data storage area 17a.

In this step S200, the central processing unit 19 as an A-rank determination unit determines whether or not the rank recognized in the diagnostic process for the L-th time is the A-rank, based on this read rank.

When the rank recognized in the diagnostic process for the L-th time is the A-rank, the determination in step S200 results in YES.

Next, in step S260, the central processing unit 19 determines whether or not the communication unit 16 is in execution of transmitting the data M (i.e., older data) acquired in step S100 for the M-th time, the rank, and the acquisition order information to the server 20.

At this time, when the communication unit 16 is in execution of transmitting the data M, the rank, and the acquisition order information to the server 20, the determination in step S260 by the central processing unit 19 results in YES.

Next, in step S262, the central processing unit 19 causes the communication unit 16 to transmit the data L (i.e., newer data), the rank, and the acquisition order information to the server 20 after the communication unit 16 transmits the data M, the rank, and the acquisition order information.

In the server 20, the central processing unit 21 receives the data L, the rank, and the acquisition order information via the communication unit 22, and stores the received data L, rank, and acquisition order information in the memory 23.

When the communication unit 16 is in a state of not being transmitting the data M together with the rank and the order of acquisition information, the determination in step S260 by the central processing unit 19 results in NO. Accordingly, in step S261, the central processing unit 19 transmits the data L (i.e., newer data), the rank, and the acquisition order information to the server 20 by the communication unit 16.

In the server 20, the central processing unit 21 then receives the data L, the rank, and the acquisition order information via the communication unit 22, and stores the received data L, rank, and acquisition order information in the memory 23.

As described above, in step S260, S261, the central processing unit 19 transmits the data L, the rank, and the acquisition order information to the server 20 from the communication unit 16.

At this time, when there is the below-described pending data stored in RAM, the central processing unit 19 in the next step S263 refrains from transmitting the data N, the rank, and the acquisition order information stored as pending data in the RAM from the communication unit 16.

In this case, the central processing unit 19 deletes the pending data from the RAM. When the rank recognized in the diagnostic process for the L-th time is the B-rank or the C-rank. the determination in step S200 by the central processing unit 19 results in NO.

Accordingly, in the next step S270, the central processing unit 19 as a B-rank determination unit determines whether or not the rank recognized in the diagnostic process for the L-th time is the B-rank.

At this time, when the rank recognized in the diagnostic process for the L-th time is the B-rank, the determination in step S270 by the central processing unit 19 results in YES.

Next, in step S271, the central processing unit 19 as a first transmission determination unit determines whether or not the communication unit 16 is in execution of transmitting the data M, the rank, and the acquisition order information to the server 20.

At this time, when the communication unit 16 is in execution of transmitting the data M, the rank, and the acquisition order information to the server 20, the determination in step S271 by the central processing unit 19 results in YES.

Next, in step S272, the central processing unit 19 as a data pending unit stores the data L, the rank, and the acquisition order information in the RAM as the pending data. Because of this, transmission of the data L, the rank, and the acquisition order information to the server 20 by the communication unit 16 is pending.

When the communication unit 16 is in the state of not being transmitting the data M to the server 20 together with the rank and the acquisition order information, the determination in step S271 by the central processing unit 19 results in NO.

In this case, in step S273, the central processing unit 19 transmits the data L together with the rank and the acquisition order information to the server 20 by the communication unit 16.

In the server 20, the central processing unit 21 receives the data L, the rank, and the acquisition order information via the communication unit 22, and stores the received data L, rank, and acquisition order information in the memory 23.

When the rank recognized in the diagnostic process for the L-th time is the C-rank, the determination in step S270 by the central processing unit 19 as a C-rank determination unit results in NO. Accordingly, in the next step S274, the central processing unit 19 determines whether or not there is the pending data in the RAM.

At this time, when there is the pending data in the RAM, the determination in step S274 by the central processing unit 19 results in YES.

In this case, in the next step S275, the central processing unit 19 as a second transmission determination unit determines whether or not the communication unit 16 is in the state of not being transmitting the data M together with the rank and the acquisition order information to the server 20.

At this time, when the communication unit 16 is in the state of not being transmitting the data M together with the rank and the acquisition order information to the server 20, the determination in step S275 by the central processing unit 19 results in YES.

Accordingly, in the next step S276, the central processing unit 19 as a pending data transmission unit reads the data N, the rank, and the acquisition order information from the RAM as the pending data, and transmits this read data N, rank, and acquisition order information to the server 20 from the communication unit 16.

In this case, in the next step S276a, the central processing unit 19 as a first transmission refrain unit refrains from transmitting the data L to the server 20 from the communication unit 16 together with the rank and the acquisition order information.

As seen from the above, while refrains from transmitting the data L, the communication unit 16 transmits the data M, the rank, and the acquisition order information being the pending data to the server 20.

In the server 20, the central processing unit 21 then receives the data M, the rank, and the acquisition order information via the communication unit 22, and stores the received data M, rank, and acquisition order information in the memory 23.

When the transmission of the data M, the rank, and the acquisition order information from the communication unit 16 to the server 20 is in execution, the determination in step S275 by the central processing unit 19 results in NO.

In this case, in the next step S277, the central processing unit 19 as a second data transmission refrain unit refrains from transmitting the data M, the rank, and the acquisition order information being the pending data to the server 20 from the communication unit 16. In this case, the central processing unit 19 deletes the pending data from the RAM.

In addition to this, in the next step S277a, the central processing unit 19 as a first transmission refrain unit refrains from transmitting the data L, the rank, and the acquisition order information to the server 20 from the communication unit 16.

When the rank recognized in the diagnostic process for the L-th time is the C-rank and the pending data is absent in the RAM, the determinations in step S270 and step S274 by the central processing unit 19 result in NO.

Accordingly, in the next step S278, the central processing unit 19 as a first transmission refrain unit refrains from transmitting the data L, the rank, and the acquisition order information to the server 20 from the communication unit 16.

The central processing unit 19 repeatedly executes each step S200 to S278 described above.

Next, a specific example of the transmission process by the central processing unit 19 in the present embodiment will be described with reference to FIG. 18. Part (a) of FIG. 18 illustrates that a series of rank, acquisition order information and data acquired by the central processing unit 19 from the sensor 11, 12 are arranged in a chronological order by way of specific example.

Part (b) of FIG. 18 illustrates that a series of data transmitted by the central processing unit 19 in step S261, S273, S276 of FIG. 17 are arranged in a chronological order by way of specific example.

First, the central processing unit 19 acquires the data 1 from each sensor 11, 12 in step S100 of the diagnostic process for the first time and recognizes the diagnosis target 2 as the A-rank based on the acquired data 1 of the respective sensors.

In this case, the central processing unit 19 stores the data 1, the A-rank, and the acquisition order information on a sensor-by-sensor basis in the data storage area 17a, 17b. In addition to this, in step S261, the central processing unit 19 transmits the data 1, the A-rank, and the acquisition order information on a sensor-by-sensor basis from the communication unit 16 to the server 20.

Next, the central processing unit 19 acquires the data 2 from each sensor 11, 12 in step S100 of the diagnostic process for the second time and recognizes the diagnosis target 2 as the B-rank based on the acquired data 2 of the respective sensors.

In this case, the central processing unit 19 stores the data 2, the B-rank, and the acquisition order information on a sensor-by-sensor basis in the data storage area 17a, 17b. At this time, the central processing unit 19 is in execution of transmitting the data 1 to the server 20.

Therefore, in step S272, the central processing unit 19 stores the data 2, the B-rank, and the acquisition order information in the RAM as the pending data. Specifically, the central processing unit 19 defers transmitting the data 2, the B-rank, and the acquisition order information from the communication unit 16 to the server 20.

Next, the central processing unit 19 acquires the data 3 from each sensor 11, 12 in step S100 of the diagnostic process for the third time and recognizes the diagnosis target 2 as the C-rank and based on the acquired data 3 of the respective sensors.

In this case, the central processing unit 19 stores the data 3, the C-rank, and the acquisition order information on a sensor-by-sensor basis in the data storage area 17a, 17b. In this case, the central processing unit 19 does not transmit the data 1, the A-rank, and the acquisition order information from the communication unit 16 to the server 20.

Then, in step S276, the central processing unit 19 transmits the data 2, the B-rank, and the acquisition order information as the pending data stored in the RAM to the server 20 by the communication unit 16. The central processing unit 19 refrains from transmitting the data 3, the C-rank, and the acquisition order information from the communication unit 16 to the server 20.

Next, the central processing unit 19 acquires the data 4 from each sensor 11, 12 in step S100 of the diagnostic process for the fourth time and recognizes the diagnosis target 2 as the A-rank based on the acquired data 4 of the respective sensors.

In this case, the central processing unit 19 stores the data 4, the A-rank, and the acquisition order information on a sensor-by-sensor basis in the data storage area 17a, 17b.

At this time, the central processing unit 19 is in execution of transmitting the data 2, the B-rank, and the acquisition order information to the server 20. Therefore, in step S262, the central processing unit 19 transmits the data 4, the A-rank, and the acquisition order information to the server 20 from the communication unit 16 after transmitting the data 2, the B-rank, and the acquisition order information to the server 20.

Next, the central processing unit 19 acquires the data 5 from each sensor 11, 12 in step S100 of the diagnostic process for the fifth time and recognizes the diagnosis target2 as the B-rank based on the acquired data 5 of the respective sensors.

In this case, the central processing unit 19 stores the data 5, the B-rank, and the acquisition order information on a sensor-by-sensor basis in the data storage area 17a, 17b. At this time, the central processing unit 19 is in execution of transmitting the data 4, the A-rank, and the acquisition order information to the server 20. Therefore, in step S272, the central processing unit 19 stores the data 5, the B-rank, and the acquisition order information for each sensor in the RAM as the pending data.

Next, the central processing unit 19 acquires the data 6 from each sensor 11, 12 in step S100 of the diagnostic process for the sixth time and recognizes the diagnosis target 2 as the C-rank based on the acquired data 6 of the respective sensors.

In this case, the central processing unit 19 stores the data 6, the C-rank, and the acquisition order information on a sensor-by-sensor basis in the data storage area 17a, 17b. At this time, the central processing unit 19 is in execution of transmitting the data 4, the A-rank, and the acquisition order information to the server 20.

Accordingly, in step S277, the central processing unit 19 refrains from transmitting the data 5, the B-rank, and the acquisition order information as the pending data on a sensor-by-sensor basis to the server 20 from the communication unit 16.

Next, in step S277a, the central processing unit 19 refrains from transmitting the data 6, the C-rank, and the acquisition order information from the communication unit 16 to the server 20.

Next, the central processing unit 19 acquires the data 7 from each sensor 11, 12 in step S100 of the diagnostic process for the seventh time and recognizes the diagnosis target2 as the A-rank based on the acquired data 7 of the respective sensors.

In this case, the central processing unit 19 stores the data 7, the A-rank, and the acquisition order information on a sensor-by-sensor basis in the data storage area 17a, 17b. The central processing unit 19 thereafter ends transmitting the data 4, the A-rank, and the acquisition order information on a sensor-by-sensor basis from the communication unit 16 to the server 20.

Accordingly, in step S262, the central processing unit 19 transmits the data 7, the A-rank, and the acquisition order information from the communication unit 16 to the server 20.

Next, the central processing unit 19 acquires the data 8 from each sensor 11, 12 in S100 of the diagnostic process for the eighth time and recognizes the diagnosis target 2 as the C-rank based on the acquired data 8 of the respective sensors.

In this case, the central processing unit 19 stores the data 7, the C-rank, and the acquisition order information on a sensor-by-sensor basis in the data storage area 17a, 17b. At this time, the pending data stored in the RAM is absent. Therefore, in step S278, the central processing unit 19 refrains from transmitting the data 8, the C-rank, and the acquisition order information on a sensor-by-sensor basis from the communication unit 16 to the server 20.

Next, the central processing unit 19 acquires the data 9 from each sensor 11, 12 in S100 of the diagnostic process for the ninth time and recognizes the diagnosis target2 as the B-rank based on the acquired data 9 of the respective sensors.

In this case, the central processing unit 19 stores the data 9, the B-rank, and the acquisition order information on a sensor-by-sensor basis in the data storage area 17a, 17b. At this time, the central processing unit 19 is in execution of transmitting the data 7, the A-rank, and the acquisition order information on a sensor-by-sensor basis to the server 20. Therefore, in step S272, the central processing unit 19 stores the data 9, the B-rank, and the acquisition order information in the RAM as the pending data on a sensor-by-sensor basis.

Next, the central processing unit 19 acquires the data 10 from each sensor 11, 12 in step S100 for the tenth time, and based on the acquired data 10 of the respective sensors, recognizes the diagnosis target 2 as the C-rank.

In this case, the central processing unit 19 stores the data 10, the C-rank, and the acquisition order information on a sensor-by-sensor basis in the data storage area 17a, 17b. At this time, the communication unit 16 has ended transmitting the data 7, the A-rank, and the acquisition order information to the server 20 on a sensor-by-sensor.

Therefore, the determination in step S275 by the central processing unit 19 results in YES. Accordingly, the central processing unit 19 transmits, on a sensor-by-sensor, the data 10, the B-rank, and the acquisition order information as the pending data stored in the RAM to the server 20 by the communication unit 16.

Next, the central processing unit 19 acquires the data 11 from each sensor 11, 12 in step S100 of the diagnostic process for the eleventh time and recognizes the diagnosis target 2 as the A-rank based on the acquired data 11 of the respective sensors.

In this case, the central processing unit 19 stores the data 11, the A-rank, and the acquisition order information on a sensor-by-sensor basis in the data storage area 17a, 17b. Thereafter, in step S261, the central processing unit 19 transmits the data 11, the A-rank, and the acquisition order information from the communication unit 16 to the server 20.

Next, the central processing unit 19 acquires the data 12 from each sensor 11, 12 in step S100 of the diagnostic process for the twelfth time and recognizes the diagnosis target 2 as the B-rank based on the acquired data 12 of the respective sensors.

In this case, the central processing unit 19 stores the data 12, the B-rank, and the acquisition order information on a sensor-by-sensor basis in the data storage area 17a, 17b. At this time, the central processing unit 19 is in execution of transmitting the data 11, the A-rank, and the acquisition order information on a sensor-by-sensor basis from the communication unit 16 to the server 20.

Therefore, in step S272, the central processing unit 19 stores the data 12, the B-rank, and the acquisition order information in the RAM as the pending data on a sensor-by-sensor basis.

Next, the central processing unit 19 acquires the data 13 from sensor 11, 12 in step S100 of the diagnostic process for the thirteenth time and recognizes the diagnosis target2 as the A-rank based on the acquired data 13 of the respective sensors.

Thereafter, in step S262, the central processing unit 19 transmits the data 13, the A-rank, and the acquisition order information from the communication unit 16 to the server 20 after transmitting the data 11, the A-rank, and the acquisition order information from the communication unit 16 to the server 20 on a sensor-by-sensor basis. At this time, the central processing unit 19 refrains from transmitting the data 12, the B-rank, and the acquisition order information as the pending data for each sensor to the server 20 from the communication unit 16.

Next, the central processing unit 19 acquires the data 14 from each sensor 11, 12 in step S100 of the diagnostic process for the fourteenth time and recognizes the diagnosis target 2 as the C-rank based on the acquired data 14 of the respective sensors.

In this case, the central processing unit 19 stores the data 14, the C-rank, and the acquisition order information on a sensor-by-sensor basis in the data storage area 17a, 17b. At this time, the pending data is absent in the RAM. The central processing unit 19 is in execution of transmitting the data 13, the A-rank, and the acquisition order information on a sensor-by-sensor basis to the server 20.

In step S278, the central processing unit 19 refrains from transmitting the data 14, the C-rank, and the acquisition order information from the communication unit 16 to the server 20.

Next, the central processing unit 19 acquires the data 15 from each sensor 11, 12 in step S100 of the diagnostic process for the fifteenth time and recognizes the diagnosis target 2 as the A-rank based on the acquired data 15 of the respective sensors.

At this time, in step S262, the central processing unit 19 transmits the data 15, the A-rank, and the acquisition order information from the communication unit 16 to the server 20 after transmitting the data 13, the A-rank, and the acquisition order information from the communication unit 16 to the server 20.

According to the present embodiment described above, the central processing unit 19 is provided with step S260 of, upon recognizing the A-rank in the diagnostic process for the N-th time, determining as to whether or not transmission of the data M, the A-rank, and the acquisition order information from the communication unit 16 to the server 20 on a sensor-by-sensor basis is in execution. In the above, N and M each denote a count of execution of the diagnostic process of step S100, and M is an integer less than N.

When the A-rank is recognized in the diagnostic process for the N-th time and the communication unit 16 is in execution of transmitting the data M, the A-rank, and the acquisition order information to the server 20 on a sensor-by-sensor basis, the determination in step S260 by the central processing unit 19 results in YES.

For this case, the central processing unit 19 is provided with step S262 of transmitting the data N, the A-rank, and the acquisition order information from the communication unit 16 to the server 20 on a sensor-by-sensor basis after transmitting the data M, the A-rank, and the acquisition order information from the communication unit 16 to the server 20 on a sensor-by-sensor basis.

Because of the above, the data N used in recognizing the A-rank can be appropriately transmitted to the server 20. Therefore, the server 20 can appropriately store the data N being of importance for analyzing the state of the diagnosis target 2.

The present embodiment configured as described above provides the following operational effects (12) (13).
(12) Upon recognizing the B-rank based on the data N and determining that transmission of the data M, the rank, and the acquisition order information from communication unit 16 to the server 20 on a sensor-by-sensor basis is in execution, the central processing unit 19 stores the data N, the B-rank, and the acquisition order information in the RAM as the pending data. Therefore, the data N used in recognizing the B-rank can be retained in the RAM depending on the communication state.
(13) Upon recognizing the C-rank in the diagnostic process for the L-th time and determining that the data N has not been transmitted to the server 20 together with the rank and the acquisition order information, the central processing unit 19 transmits the data N, the B-rank, and the acquisition order information as the pending data to the server 20. Therefore, the data N used in recognizing the B-rank can be appropriately transmitted to the server 20 together with the rank and the acquisition order information.

### (Fifth Embodiment).

The above fourth embodiment illustrates that upon recognizing the A-rank in the diagnostic process for the N-th time and determining that transmission of the data M, etc., is in execution, the central processing unit 19 transmits the data N, the A-rank, and the acquisition order information to the server 20 after transmitting the data M, etc., by way of example.

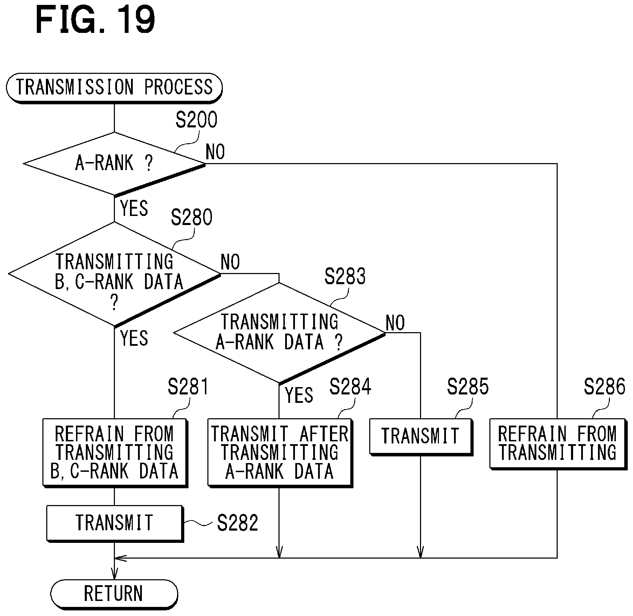

In the fifth embodiment, upon recognizing the A-rank in the diagnostic process for the N-th time and determining that transmission of the B-rank data is in execution, the central processing unit 19 refrains from transmitting the B-rank data and transmits the data N, which will be described with reference to FIG. 19.

The present embodiment and the above third embodiment differ in the transmission process by the central processing unit 19. Therefore, the following will describe mainly the transmission process by the central processing unit 19.

The central processing unit 19 in the present embodiment executes the transmission process according to the flowchart in FIG. 19 instead of FIG. 17. For illustrative purpose, M and N each denote a count of execution of the diagnostic process in FIG. 4, i.e., the transmission process in FIG. 19 where M is an integer less than N. The following will describe the transmission process for the N-th time that the central processing unit 19 executes.

In the flowchart in FIG. 19, the same symbol as in FIG. 17 indicates the same step to save the description.

First, in step S200, the central processing unit 19 reads the rank recognized in the diagnostic process for the N-th time from the data storage area 17a and determines whether this read rank is the A-rank or not.

At this time, when the rank recognized in the diagnostic process for the N-th time is the A-rank, the determination in step S200 by the central processing unit 19 results in YES. At this time, upon recognizing the B-rank or the C-rank in the diagnostic process for the M-th time, the central processing unit 19 executes the next step S280.

Specifically, in step S280, the central processing unit 19 determines whether or not transmission of the data M being the B-rank data or the C-rank data to the server 20 from the communication unit 16 together with the rank and acquisition order information is in execution.

At this time, when transmission of the data M being the B-rank data or the C-rank data to the server 20 from the communication unit 16 together with the rank and acquisition order information is in execution, the determination in step S280 by the central processing unit 19 results in YES.

Accordingly, in step S281, the central processing unit 19 refrains from transmitting the data M, the rank, and the acquisition order information to the server 20 from the communication unit 16.

Accordingly, in step S282, the central processing unit 19 transmits the data N acquired in the diagnostic process for the N-th time to the server 20 from the communication unit 16 together with the A-rank and acquisition order information.

When the A-rank is recognized in the diagnostic process for the M-th time, the determination in step S280 by the central processing unit 19 results in NO. Accordingly, in the next step S283, the central processing unit 19 determines whether or not transmission of the data M being the A-rank data from the communication unit 16 to the server 20 together with the A-rank and the acquisition order information is in execution.

At this time, when the transmission of the data M being the A-rank data from the communication unit 16 to the server 20 together with the A-rank and the acquisition order information is in execution, the determination in step S283 by the central processing unit 19 results in YES.

In this case, in the next step S284, the central processing unit 19 transmits the data N, the A-rank, and the acquisition order information to the server 20 via the communication unit 16 after transmitting the data M, the A-rank, and the acquisition order information.

In the server 20, the central processing unit 21 receives the data N, the A-rank, and the acquisition order information via the communication unit 22, and stores the received data N, A-rank, and acquisition order information in the memory 23.

When the transmission of the data M, the A-rank and the acquisition order information from the communication unit 16 is not in execution, the determination in step S283 by the central processing unit 19 results in NO. Accordingly, in step S285, the central processing unit 19 transmits the data N, the A-rank, and the acquisition order information to the server 20 via the communication unit 16.

In the server 20, the central processing unit 21 receives the data N, the A-rank, and the acquisition order information via the communication unit 22, and stores the received data N, A-rank, and acquisition order information in the memory 23.

When the rank-B or the rank-C is recognized in the diagnostic process for the N-th time, the determination in step S200 by the central processing unit 19 results in NO. In this case, in step S286, the central processing unit 19 refrains from transmitting the data N, the rank, and the acquisition order information to the server 20 from the communication unit 16.

In the present embodiment described above, upon recognizing the A-rank in the diagnostic process for the N-th time and determining that transmission of the data M being the B-rank data or the C-rank data to server 20 is in execution, the central processing unit 19 refrains from transmitting the data M and transmits the data N to server 20. Therefore, it is possible to transmit the data N as the A-rank data to the server 20 preferentially over the B-rank data or the C-rank data.

### (Sixth Embodiment).

In the above described first embodiment, when the events X1 and X2 are both established, the central processing unit 19 determines that the blade tool of the FA device is the A-rank, by way of example.

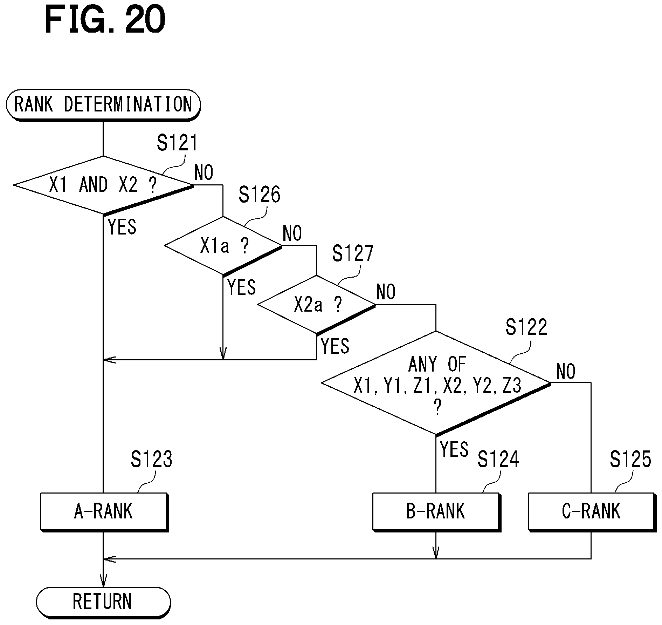

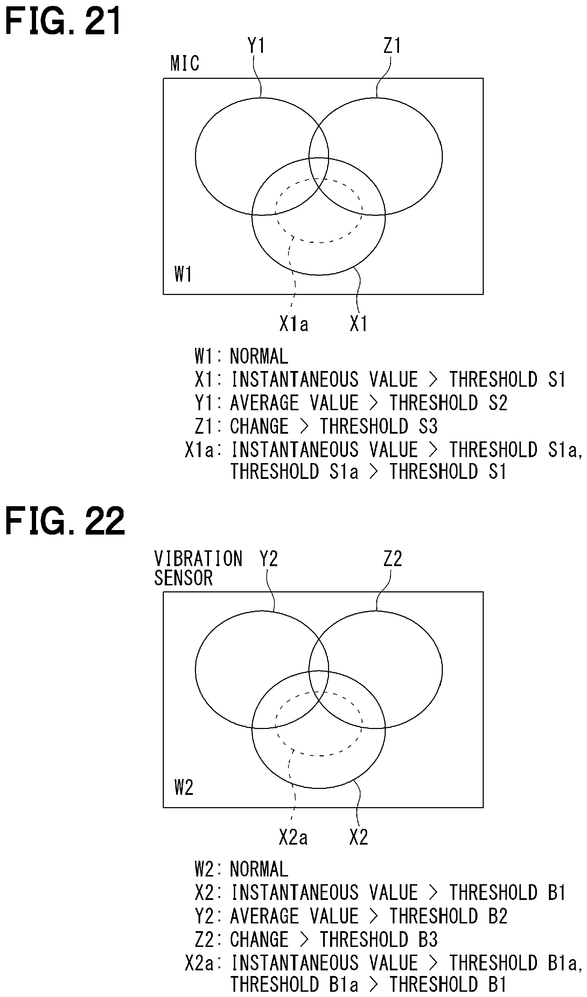

In the fifth embodiment, when an event other than the events X1 and X2 is established, the central processing unit 19 also determines that the blade tool of the FA device is the A-rank, which will be described with reference to FIG. 20 and FIG. 21.

FIG. 20 is a flowchart showing the rank determination process by the central processing unit 19 The central processing unit 19 executes the rank determination process according to the flowchart in FIG. 20 instead of FIG. 8.

In the flowchart in FIG. 20, the same symbol as in FIG. 8 indicates the same or substantially the same step to save its description. The following will describe the rank determination process of the diagnostic process for the N-th time by the central processing unit 19.

First, in step S121, the central processing unit 19 determines whether or not the events X1 and X2 are both established. At this time, the central processing unit 19 determines whether or not the data for each sensor is all abnormal.

When the events X1 and X2 are both established, the determination in step S121 by the central processing unit 19 results in YES. Accordingly, the central processing unit 19 determines in step S121 that the blade tool of the FA device is the A-rank.

When not both the events X1 and X2 are established, the determination in step S121 by the central processing unit 19 results in NO.

In this case, in step S126, the central processing unit 19 as a second abnormality determination unit determines whether or not the event X1a is established, thereby determining whether or not the data acquired from the microphone 11 is abnormal. The event X1a is such an event that the instantaneous value MaN of the output signal of the microphone 11 is greater than the threshold value S1a, as shown in FIG. 21.

Therefore, in step S126, the central processing unit 19 make a determination as to whether or not the instantaneous value of the output signal MaN of the microphone 11 is greater than the threshold value S1a. The threshold value S1a is greater than the threshold value S1 used in the determination of step S121.

When the instantaneous value of the output signal MaN of the microphone 11 is greater than the threshold value S1a, the determination in step S126 by the central processing unit 19 results in YES as the event X1a is established.

Accordingly, the central processing unit 19 determines in step S121 that the blade tool of the FA device is the A-rank.

When the instantaneous value of the output signal MaN of the microphone 11 is less than the threshold value S1a, the determination in step S126 by the central processing unit 19 results in NO as the event X1a is not established.

In this case, in step S127, the central processing unit 19 as a second abnormality determination unit determines whether or not the event X2a is established, thereby determining whether or not the data acquired from the vibration sensor 12 is abnormal. The event X2a is such an event that the instantaneous value SnN of the output signal of the vibration sensor 12 is greater than the threshold value B1a, as shown in FIG. 22.

Therefore, in step S127, the central processing unit 19 determines as to whether or not the instantaneous value SnN of the output signal of the vibration sensor 12 is greater than the threshold value B1a. The threshold value B1a is greater than the threshold value B1 used in the determination of step S121.

When the instantaneous value SnN of the output signal of the vibration sensor 12 is greater than the threshold value B1a, the determination in step S127 by the central processing unit 19 results in YES as the event X2a is established.

As described above, in steps S126 and S127, the central processing unit 19 determines whether at least one data among the data of respective sensors is abnormal or not. At this time, when at least one data among the data of respective sensors is abnormal, the determination in at least one of steps S126, S127 by the central processing unit 19 results in YES.

Accordingly, in step S123 the central processing unit 19 determines that the blade tool of the FA device is the A-rank.

As described above, when the determination in at least one of steps S121, S126 and S127 in the diagnostic process for the N-th time results in YES, the central processing unit 19 determines in step S123 that the blade tool of the FA equipment is the A-rank.

In the present embodiment, step S121 is used to detect for wear due to long-term use of the blade tool of the FA equipment. Steps S126 and S127 are used to detect for crack or defect in the blade tool of the FA equipment.

Therefore, the determinations in steps S121, S126 and S127 by the central processing unit 19 as to whether or not the data is abnormal are based on different criteria. In other words, different threshold values are used in the determinations in step S121 and step S126 and step S127.

When the instantaneous value SnN of the output signal of the vibration sensor 12 is less than the threshold value B1a, the determination in step S127 by the central processing unit 19 results in NO as the event X2a is not established.

Next, in step S122, the central processing unit 19 determines whether or not at least one of the events X1, Y1, Z1, X2, Y2, or Z2 is established.

When at least one of the events X1, Y1, Z1, X2, Y2, or Z2 is established, the determination in step S122 by the central processing unit 19 results in YES. Accordingly, in step S124, the central processing unit 19 recognizes that the diagnosis target 2 is the B-rank.

When all the events X1, Y1, Z1, X2, Y2, or Z2 are not established in step S122, the central processing unit 19 in step S125 recognizes that the diagnosis target 2 is the C-rank as the events W1 and W2 are both established.

According to the present embodiment described above, the central processing unit 19 recognizes that the diagnosis target 2 is the A-rank, upon establishment of either one of the events X1a and X2a, as well as upon establishment of both the events X1 and X2. Therefore, it is possible to recognize the A-rank resulting from a cause other than establishment of both the events X1 and X2 in the blade tool of the FA equipment.

### (Seventh Embodiment).

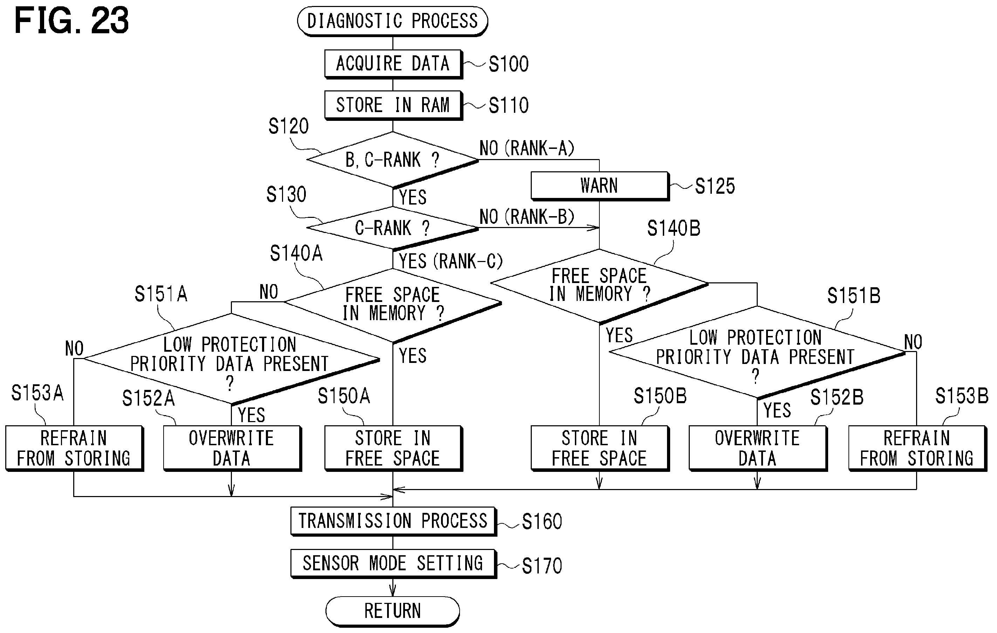

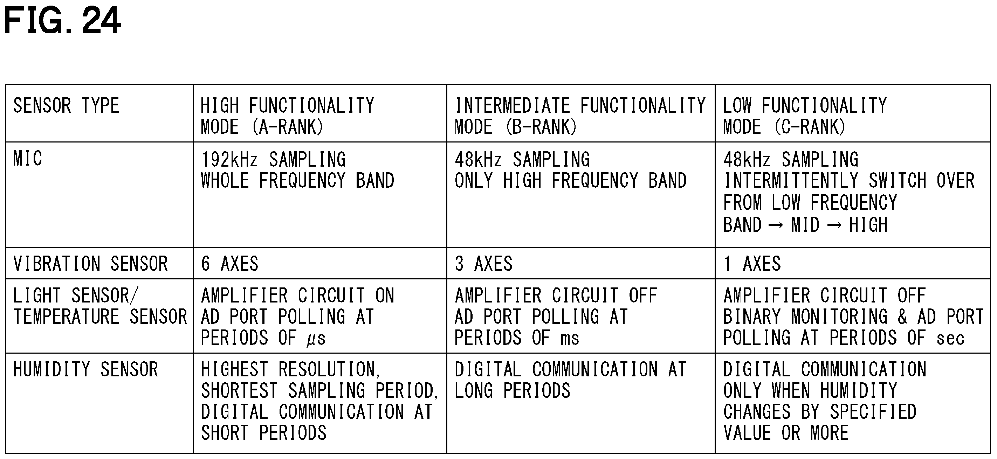

With reference to FIGS. 23 and 24, this seventh embodiment illustrates that a functionality to detect the state of the diagnosis target 2 by the sensor 11 to 15 in the diagnostic process for the (N+1)-th time is changed depending on the rank recognized in the diagnostic process for the N-th time by way of example. N and N+1 each denote an integer indicating a count of execution of the diagnostic process.

FIG. 23 is a flowchart showing details of the diagnostic process by the central processing unit 19 of the present embodiment. FIG. 24 shows a correspondence relationship between ranks and detection functionality of the sensor 11 to 15.

The central processing unit 19 in the present embodiment executes the diagnostic process according to the flowchart in FIG. 23 instead of FIG. 4.

The flowchart in FIG. 23 additionally includes a sensor mode setting process in step S170 with respect to the flowchart in FIG. 4.

The sensor mode setting process in step S170 is a process of setting the detection functionality of the sensor 11 to 15 used in acquiring the data in step S100 of the diagnostic process for the (N+1)-th time, based on the rank recognized in step S120, S130 of the diagnostic process for the N-th time.

Specifically, in step S170, the central processing unit 19 executes a setting process (i.e., detection functionality setting unit) for the detection functionality as follows.

When the A-rank is recognized in step S120, S130 of the diagnostic process for the N-th time, the central processing unit 19 sets a high-functionality mode to the sensor 11 to 15 for the diagnostic process for the (N+1)-th time. Because of this, the sensor 11 to 15 can perform sensing with high detection functionality in step S100 of the diagnostic process for the (N+1)-th time.

When the B-rank is recognized in step S120, S130 of the diagnostic process for the N-th time, the central processing unit 19 sets an intermediate-functionality mode to the sensor 11 to 15 for the diagnostic process for the (N+1)-th time. Because of this, the sensor 11 to 15 can perform sensing with intermediate detection functionality in step S100 of the diagnostic process for the (N+1)-th time.

When the C-rank is recognized in step S120, S130 of the diagnostic process for the N-th time, the central processing unit 19 sets a low-functionality mode to the sensor 11 to 15 for the diagnostic process for the (N+1)-th time. Because of this, the sensor 11 to 15 can perform sensing with low detection functionality in step S100 of the diagnostic process for the (N+1)-th time.

As described above, as the rank recognized in the diagnostic process for the N-the time is higher, i.e., the abnormality degree is higher, the sensor 11 to 15 performs the sensing with higher detection functionality in step S100 of the diagnostic process for the (N+1)-th time.

In the high-functionality mode, the central processing unit 19 repeatedly acquires the data by sampling, at a high sampling frequency (e.g., 192 kHz) over an entire frequency band, the detection signal indicating the sound given to the port P1 from the microphone 11.

In the intermediate functionality mode, the central processing unit 19 repeatedly acquires the data by sampling, at a low sampling frequency (e.g., 48 kHz) over an entire frequency band, the detection signal indicating the sound given to the port P1 from the microphone 11.

In the low-functionality mode, the central processing unit 19 repeatedly acquires the data by sampling, at a low sampling frequency (e.g., 48 kHz), the detection signal indicating the sound given to the port P1 from the microphone 11. In the low-functionality mode, the central processing unit 19 intermittently switches over a frequency band for sampling the detection signal given to port P1, in an order of a low frequency band, an intermediate frequency band, a high frequency band, and the low frequency band.

Because of this, less power is consumed by the central processing unit 19 in the intermediate functionality mode than in the high functionality mode. Less power is consumed by the central processing unit 19 in the low-functionality mode than in the intermediate functionality mode.

The central processing unit 19 switches over the data acquired based on the detection signal given to the port P2 from the vibration sensor 12, according to the functionality mode.

In the high-functionality mode, the central processing unit 19 acquires the data indicating the magnitudes of the vibration in the 6-axis directions based on the detection signal given to the port P2. For example, the central processing unit 19 stores the data indicating the largest magnitude among the data indicating the magnitudes of the vibration in the six axis directions in the data storage area 17b.

In the intermediate functionality mode, the central processing unit 19 acquires the data indicating the magnitudes of the vibration in the three axis directions based on the detection signal given to the port P2. The vibration in the three axis directions is, for example, the vibration in the x-axis direction, the y-axis direction, and the z-axis direction. For example, the central processing unit 19 stores the data indicating the largest magnitude among the data indicating the magnitudes of vibration in the three axis directions in the data storage area 17b.

In the low-functionality mode, the central processing unit 19 acquires the data indicating the magnitude of vibration in one axis direction based on the detection signal given to the port P2. The vibration in one axis direction is, for example, the vibration in the x-axis direction.

Because of this, less power is consumed by the central processing unit 19 in the intermediate functionality mode than in the high functionality mode. Less power is consumed by the central processing unit 19 in the low-functionality mode than in the intermediate functionality mode.

The central processing unit 19 switches over period of acquiring the data from the optical sensor 13 according to the functionality mode.

In the high-functionality mode, the central processing unit 19 outputs a polling signal to the light sensor 13 through the port P3 at short periods of, for example, a few microseconds. The polling signal is a signal requesting the light sensor 13 to output the detection signal with the amplifier circuit 13b being in an ON state.

Therefore, the light sensor 13 repeatedly outputs the detection signal at short periods in response to the polling signals from the central processing unit 19. Accordingly, the central processing unit 19 repeatedly acquires the data from the optical sensor 13 at short periods.

Here, in the high-functionality mode, the light sensor 13 outputs the detection signal with the amplifier circuit 13b being in the ON state. Accordingly, the amplifier circuit 13b amplifies the output signal of the sensor element 13a and outputs this voltage-amplified signal to the port 3 of the central processing unit 19.

In the intermediate-functionality mode, the central processing unit 19 outputs the polling signal to the light sensor 13 through port P3 at long periods of, for example, several milliseconds. Therefore, the light sensor 13 outputs the detection signal at long periods in response to the polling signals from the central processing unit 19. Accordingly, the central processing unit 19 acquires the data from the optical sensor 13 at long periods.

Here, in the intermediate-functionality mode, the central processing unit 19 outputs the polling signal to the light sensor 13 requesting that the light sensor 13 output the detection signal with the amplifier circuit 13b being an OFF state. Thus, the output signal of the sensor element 13a bypasses the amplifier circuit 13b and is output to the port 3 of the central processing unit 19.

In the low-functionality mode, the central processing unit 19 outputs the polling signal to the light sensor 13 through the port P3 at longest periods of, for example, a few seconds. Therefore, the light sensor 13 outputs the detection signal at the longest periods in response to the polling signals from the central processing unit 19. Accordingly, the central processing unit 19 samples the detection signal of the light sensor 13 at the longest periods to acquire the data.

Thus, in the low-functionality mode, the central processing unit 19 acquires the data from the light sensor 13 at periods longer than in the intermediate-functionality mode. In the intermediate-functionality mode, the central processing unit 19 acquires the data from the light sensor 13 at periods longer than in the high-functionality mode.

Because of this, less power is consumed by the central processing unit 19 in the intermediate functionality mode than in the high functionality mode. Less power is consumed by the central processing unit 19 in the low-functionality mode than in the intermediate functionality mode.

In addition to this, in the low-functionality mode, the central processing unit 19 monitors the detection signal given to the port P3 from the light sensor 13 as well as acquiring the data using the polling signals. In this case, when the signal level of the detection signal exceeds a threshold value, the central processing unit 19 samples the detection signal given to the port P2 from the light sensor 13 to acquire the data.

Here, in the low-functionality mode, the central processing unit 19 outputs the polling signal to the light sensor 13 requesting that the light sensor 13 output the detection signal with the amplifier circuit 13b being in the OFF state. Thus, the output signal of the sensor element 13a bypasses the amplifier circuit 13b and is output to the port 3 of the central processing unit 19.

As with the case in the light sensor 13, the central processing unit 19 switches over the periods of acquiring the data from the temperature sensor 14 according to the functional mode. In addition to this, as with the case in the light sensor 13, the central processing unit 19 turns ON and OFF the amplifier circuit 14b of the temperature sensor 14 according to the functionality mode.

The central processing unit 19 switches over the detection functionality of the humidity sensor 15 according to the functionality mode.

In the high-functionality mode, the central processing unit 19 issues a request to the humidity sensor 15 requesting that the output signal of the sensor element 15a be sampled by the analog-to-digital converter 15b at shortest sampling periods and at highest resolution.

Accordingly, in response to the request from the central processing unit 19, the digital signal obtained by sampling the output signal of the sensor element 15a at the shortest sampling periods and at the highest resolution is output to the port 5 by the analog-to-digital converter 15b.

In the intermediate-functionality mode, the central processing unit 19 issues a request to the humidity sensor 15 requesting that the analog-to-digital converter 15b sample the output signal of the sensor element 15a at long sampling periods.

Accordingly, in response to the request from the central processing unit 19, the digital signal obtained by sampling the output signal of the sensor element 15a at the long sampling periods is output to the port 5 by the analog-to-digital converter 15b. Therefore, in the intermediate-functionality mode, the sampling period is longer and the resolution is coarser than in the high-functionality mode.

In the low-functionality mode, the central processing unit 19 issues a request to the humidity sensor 15 requesting that the analog-to-digital converter 15b sample the output signal of the sensor element 15a in response to only the detected temperature of the temperature sensor 14 changing by a specified value or more.

Therefore, in the low-functionality mode, the central processing unit 19 acquires via the port 5 the digital signal, in other words, the data, output from the humidity sensor 15 only when the temperature detected by the temperature sensor 14 changes by the specified value or more.

Because of this, less power is consumed by the central processing unit 19 in the intermediate functionality mode than in the high functionality mode. Less power is consumed by the central processing unit 19 in the low-functionality mode than in the intermediate functionality mode.

In the present embodiment described above, upon recognizing the rank indicating the low abnormality degree in the diagnostic process for the N-th time, the central processing unit 19 sets the low data detection functionality of the sensor 11 to 15 in the diagnostic process for the (N+1)-th time, as compared with recognizing the rank indicating the high abnormality degree.

For example, when the C-rank is recognized in the diagnostic process for the N-th time, the central processing unit 19 sets the lower data detection functionality of the sensor 11 to 15 in the diagnostic process for the (N+1)-th time than when the B-rank is recognized in the diagnostic process for the N-th time.

When the B-rank is recognized in the diagnostic process for the N-th time, the central processing unit 19 sets the lower data detection functionality of the sensor 11 to 15 in the diagnostic process for the (N+1)-th time than when the A-rank is recognized in the diagnostic process for the N-th time.

Therefore, it is possible that less power is consumed in the central processing unit 19 or the sensor 11 to 15 as the central processing unit 19 recognizes the rank indicating the lower abnormality degree in the diagnostic process for the N-th time.

In the present embodiment, the central processing unit 19 recognizes the rank based on the respective data acquired from the humidity sensor 15 and the temperature sensor 14. Therefore, it is possible to recognize the rank taking into account the temperature and humidity of the environment of the diagnosis target 2.

### (Other Embodiments).

Other embodiments will be described below.

(1) The first to seventh embodiments above illustrate that the blade tool for cutting or grinding used in the FA equipment is used as the diagnosis target by way of example. Alternatively, a rotating shaft used in the FA equipment may be used as the diagnosis target. Furthermore, the diagnosis target may be a component of various equipment other than the FA equipment, and for example, may be an airflow fan mounted to a vehicle.
(2) The first to seventh embodiments above illustrate that the central processing unit 19 recognizes one rank from among the A-rank, the-B-rank, and the C-rank by way of example.

However, the central processing unit 19 may recognize one rank from among two ranks. Alternatively, the central processing unit 19 may recognize one rank from among four or more ranks.
(3) The first to seventh embodiments above illustrate that one or more detection units are the microphone 11, the vibration sensor 12, the light sensor 13, and the temperature sensor 14 by way of example.

Alternatively, one or more detection units may one or more sensors other than the microphone 11, the vibration sensor 12, the light sensor 13, and the temperature sensor 14.

For example, when the instantaneous value of the data acquired from one sensor is greater than or equal to a first threshold value, the rank-A may be recognized. When the instantaneous value of the data acquired from one sensor is less than the first threshold value and is greater than or equal to a second threshold value, the rank-B may be recognized. When the instantaneous value is less than the second threshold value, the rank-C may be recognized. Here, the first threshold value is greater than the second threshold value.
(4) The first to seventh embodiments above illustrate that, for each sensor, the central processing unit 19 stores the data, the rank, and the acquisition order information in the data storage areas 17a, 17b, 17c, 17d, 17e by way of example.

Alternatively, for each sensor, the central processing unit 19 may store the data, the rank, and the acquisition order information in a storage area other than the data storage areas 17a, 17b, 17c, 17d, 17e.
(5) The first to seventh embodiments above illustrate that the central processing unit 19 recognizes the rank based on the respective data acquired from the sensors 11, 12, 13, 14 by way of example. Alternatively, the central processing unit 19 may recognize the rank based on the data acquired from any one of the sensors 11, 12, 13, 14.

(6) In the first to seventh embodiments above, upon recognizing the A-rank of the diagnosis target 2, the central processing unit 19 may stop operation of the equipment (e.g., FA equipment) including the diagnosis target 2 (e.g., blade tool).
(7) The first to seventh embodiments above illustrate that the nonvolatile memory 17 is used as the storage unit for storing the data by way of example. However, without limitation to this, various rewritable storage media such as magnetic disks and magnetic tapes may be used.
(8) The present disclosure is not limited to the above-described embodiments and may be modified as appropriate within the scope of claims. The above respective embodiments are not independent and are combinable except for clearly infeasible combinations. Elements of the respective embodiments are not indispensable unless otherwise explicitly stated as indispensable or unless otherwise considered as indispensable in principle. Further, when the respective embodiments described above refer to numerical values such as the number, numerical value, quantity, range, or the like of elements of the embodiments, the embodiments are not limited to the specific numerical values unless otherwise explicitly stated as indispensable or unless otherwise considered as indispensable in principle. Further, when the respective embodiments described above refer to shapes of elements or positional relationships, the embodiments are not limited to the shapes and the positional relationships unless otherwise explicitly stated as indispensable or unless otherwise considered as indispensable in principle, Further, when the respective embodiments described above refer to acquiring vehicle external environment information from a sensor, the vehicle external environment information may be acquired not from the sensor but from cloud or a server outside the vehicle. Alternatively, without using the sensor, it is also possible to acquire relevant information related to the external environmental information from cloud or a server outside the vehicle and estimate the external environmental information based on the acquired relevant information.

### (Aspects of Present Disclosure)

Various aspects will be described below.

(Aspect 1) A diagnostic device includes:
a storage unit (17, 17a to 17e) for storing data;
at least one detection unit (11, 12, 13, 14, 15) that detects a state of a diagnosis target (2);
a data acquisition unit (S100) that repeatedly executes acquiring data indicating the state of the diagnosis target from the detection unit;
a rank recognition unit (S120, S130) that repeatedly recognizes a rank indicating an abnormality degree of the diagnosis target based on the data acquired by the data acquisition unit;
a storage control unit (S150A, S150B, S152A, S152B) that repeatedly stores the data acquired by the data acquisition unit together with the rank and acquisition order information in the storage unit, the acquisition order information being information indicating in which order the data is acquired by the data acquisition unit,
   wherein a rank indicating a lowest abnormality degree among the ranks stored in the storage unit is a lowest rank, the data used by the rank recognition unit in recognizing the lowest rank is lowest rank data, the data acquired by the data acquisition unit at latest timing is latest data, and a rank recognized by the rank recognition unit based on the latest data is a latest rank; and
a rank determination unit (S151A, S151B) that determines whether or not either one of: the latest rank indicating the abnormality degree higher than the lowest rank; and the latest rank matching the lowest rank in the abnormality degree is established, wherein:
   when the rank determination unit determines that the either one is established, the storage control unit stores the latest data in the storage unit in place of the lowest rank data.

(Aspect 2) In the diagnostic device according to the aspect 1:
when the rank determination unit determines that the either one is established, the storage control unit stores the latest rank in the storage unit in place of the lowest rank.

(Aspect 3) In the diagnostic device according to the aspect 1 or 2:
when the rank determination unit determines that the either one is established, the storage control unit stores the acquisition order information of the latest data in the storage unit in place of the acquisition order information of the lowest rank data.

(Aspect 4) In the diagnostic device according to any one of the aspects 1 to 3:
when there is a plurality of the lowest rank data stored in the storage unit, the storage control unit stores the latest data in place of the lowest rank data acquired by the data acquisition unit at oldest timing among the plurality of the lowest rank data.

(Aspect 5) The diagnostic device according to any one of the aspects 1 to 4 further includes:
a data transmission unit (S160) that transmits the data, the rank, and the acquisition order information to an external device (20) so that the data acquired by the data acquisition unit is stored in the external device (20) together with the rank and the acquisition order information.

(Aspect 6) In the diagnostic device according to the aspect 5:
the data used by the rank recognition unit in recognizing the rank indicating a low abnormality degree is low rank data, and the data used by the rank recognition unit in recognizing the rank indicating a high abnormality degree is high rank data; and
the data transmission unit transmits the high rank data preferentially over the low rank data.

(Aspect 7) In the diagnostic device according to the aspect 6:
the data transmission unit transmits the high rank data to the external device and refrains from transmitting the low rank data to the external device, thereby transmitting the high rank data preferentially over the low rank data.

(Aspect 8) In the diagnostic device according to the aspect 7:
N-1, N, and N+2 each denote a count of execution of the data acquisition unit; the data acquired by the data acquisition unit for the (N-1)-th time is data N-1; the data acquired by the data acquisition unit for the N-th time is data N; the data acquired by the data acquisition unit for the (N+1)-th time is data N+1; and
when the rank recognition unit recognizes a highest rank indicating a highest abnormality degree based on the data N, the data transmission unit transmits the data N-1 and the data N+1 to the external device in addition to the data N.

(Aspect 9) In the diagnostic device according to the aspect 6:
the data transmission unit transmits the high rank data to the external device at a higher communication speed than the low rank data, thereby transmitting the high rank data preferentially over the low rank data.

(Aspect 10) In the diagnostic device according to the aspect 9:
N-1 and N each denote a count of execution of the data acquisition unit; the data acquired by the data acquisition unit for the (N-1)-th time is data N-1; and the data acquired by the data acquisition unit for the N-th time is data N,
the diagnostic device further including:
   a determination unit (S212) that determines whether or not an amount of change being an absolute value of a difference between the data N-1 and the data N is less than a threshold value (Sa), wherein:
   where the rank recognition unit recognizes a highest rank indicating a highest abnormality degree based on the data N-1 and recognizes the highest rank based on the data N,
      when the determination unit determines that the amount of change is less than the threshold value, the data transmission unit transmits the data N to the external device at a lower communication speed than when the determination unit determines that the amount of change is greater than or equal to the threshold value.

(Aspect 11) In the diagnostic device according to the aspect 10:
the determination unit is a first determination unit; the threshold value is a first threshold value; and a second threshold value (Sb) is smaller than the first threshold value,
the diagnostic device further including:
   a second determination unit (S213) that determines whether or not the amount of change is less than the second threshold value, wherein:
   where the rank recognition unit recognizes the highest rank indicating the highest abnormality degree based on the data N-1 and recognizes the highest rank based on the data N,
      when the second determination unit determines that the amount of change is less than the second threshold value, the data transmission unit transmits the data N to the external device at a lower communication speed than when the second determination unit determines that the amount of change is greater than or equal to the second threshold value.

(Aspect 12) In the diagnostic device according to the aspect 6,
the data transmission unit transmits the high rank data to the external device at a higher communication rate than the low rank data, thereby transmitting the high rank data preferentially over the low rank data.

(Aspect 13) In the diagnostic device according to the aspect 11:
N-1 and N each denote a count of execution of the data acquisition unit; the data acquired by the data acquisition unit for the (N-1)-th time is data N-1; and the data acquired by the data acquisition unit for the N-th time is data N,
the diagnostic device further including:
   a determination unit (S212) that determines whether or not an amount of change being an absolute value of a difference between the data N-1 and the data N is less than a threshold value (Sa), wherein:
   where the rank recognition unit recognizes a highest rank indicating a highest abnormality degree based on the data N-1, and the rank recognition unit recognizes the highest rank based on the data N,
      when the determination unit determines that the amount of change is less than the threshold value, the data transmission unit transmits the data N to the external device at a lower communication rate than when the determination unit determines that the amount of change is greater than or equal to the threshold value.

(Aspect 14) In the diagnostic device according to the aspect 13:
the determination unit is a first determination unit; the threshold value is a first threshold value; and a second threshold value (Sb) is smaller than the first threshold value,
the diagnostic device further including:
   a second determination unit (S213) that determines whether or not the amount of change is less than the second threshold value, wherein:
   where the rank recognition unit recognizes the highest rank indicating the highest abnormality degree based on the data N-1 and recognizes the highest rank based on the data N,
      when the second determination unit determines that the amount of change is less than the second threshold value, the data transmission unit transmits the data N to the external device at a lower communication rate than when the second determination unit determines that the amount of change is greater than or equal to the second threshold value.

(Aspect 15) In the diagnostic device according to the aspect 1:
N and M each denote a count of execution of the data acquisition unit; M is an integer less than N; the data acquired by the data acquisition unit for the N-th time is data N; and the data acquired by the data acquisition unit for the M-th time is data M,
the diagnostic device further including:
   a data transmission unit (S261, S262, S273) that transmits the data N, the rank, and the acquisition order information to an external device (20) so that the data N is stored in the external device together with the rank and the acquisition order information,
      wherein the rank indicating a highest abnormality degree recognized by the rank recognition unit is an A-rank;
   an A-rank determination unit (S200) that determines whether or not the rank recognized by the rank recognition unit based on the data N is the A-rank; and
   a transmission determination unit (S260, S271) that determines whether or not a communication unit (16) is in execution of transmitting the data M, the rank and the acquisition order information to the external device in order for the data M to be stored in the external device together with the rank and the acquisition order information, wherein:
when the A-rank determination unit determines that the rank recognized by the rank recognition unit is the A-rank and the transmission determination unit determines that the data M, the rank and the acquisition order information have not been transmitted by the communication unit to the external device, the data transmission unit (S261) transmits the data N to the external device together with the rank and the acquisition order information; and
when the A-rank determination unit determines that the rank recognized by the rank recognition unit is the A-rank and the transmission determination unit determines that the communication unit is in execution of transmitting the data M, the rank and the acquisition order information to the external device, the data transmission unit (S262) transmits the data N to the external device together with the rank and the acquisition order information after the communication unit transmits the data M and the rank and the acquisition order information.

(Aspect 16) In the diagnostic device according to the aspect 15:
a rank recognized by the rank recognition unit indicating the abnormality degree lower than the A-rank is a B-rank,
the diagnostic device further including:
   a B-rank determination unit (S270) that determines whether or not the rank recognized by the rank recognition unit based on the data N is the B-rank; and
   a data pending unit (S272) that defers transmitting the data by the communication unit to the external device together with the rank and the order of acquisition information, wherein:
      when the B-rank determination unit determines that the rank recognized by the rank recognition unit is the B-rank and the transmission determination unit determines that the data M, the rank and the acquisition order information have not been transmitted by the communication unit to the external device, the data transmission unit (S273) transmits the data N to the external device together with the rank and the acquisition order information; and
      when the B-rank determination unit determines that the rank recognized by the rank recognition unit is the B-rank and the transmission determination unit determines that the communication unit is in execution of transmitting the data M, the rank and the acquisition order information to the external device, the data pending unit defers transmitting the data N to the external device together with the rank and the acquisition order information.

(Aspect 17) In the diagnostic device according to the aspect 16:
L denotes the count of execution of the data acquisition unit and is an integer greater than N; the data acquired by the data acquisition unit for the L-th time is data L; and a rank recognized by the rank recognition unit indicating the abnormality degree lower than the B-rank is a C-rank,
the diagnostic device further including:
a C-rank determination unit (S270) that determines whether or not the rank recognized by the rank recognition unit based on the data L is the C-rank;
a first transmission refrain unit (S276a, S277a, S278) that refrains from transmitting the data L to the external device from the communication unit together with the rank and the acquisition order information when the C-rank determination unit determines that the rank recognized by the rank recognition unit is the C-rank,
   wherein the transmission determination unit is a first transmission determination unit;
a second transmission determination unit (S275) that determines whether or not the communication unit is in execution of transmitting the data M to the external device together with the rank and the acquisition order information for the data M to be stored in the external device together with the rank and the acquisition order information; and
a pending data transmission unit (S276) that transmits the data N, transmission of which has been pending by the data pending unit, to the external device together with the rank and the acquisition order information when the C-rank determination unit determines that the rank recognized by the rank recognition unit is the C-rank and the second transmission determination unit determines that the data M has not been transmitted to the external device by the communication unit together with the rank and the acquisition order information; and
a second data transmission refrain unit (S277) that refrains from transmitting the data N together with the rank and the acquisition order information to the external device when the C-rank determination unit determines that the rank recognized by the rank recognition unit is the C-rank and the second transmission determination unit determines that the communication unit is in execution of transmitting the data M to the external device together with the rank and the acquisition order information.

(Aspect 18) In the diagnostic device according to the aspect 1:
the at least one detection unit is a plurality of detection units that detect a plurality of types of the state of the diagnosis target;
the data acquisition unit acquires the data indicating the plurality of types of the state of the diagnosis target detected by the plurality of detection units;
for each detection unit, the storage control unit stores the data indicating the plurality of types of the state in the storage unit;
the rank recognition unit recognizes the rank based on the data indicating the plurality of types of the state; and
for each detection unit, the storage control unit stores the latest data in the storage unit in place of the lowest rank data.

(Aspect 19) In the diagnostic device according to the aspect 1:
the rank recognition unit includes:
   a first abnormality determination unit (S121) that determines whether all the data of the respective detection units acquired by the data acquisition unit are abnormal; and
   a second abnormality determination unit (S126, S127) that determines whether at least one data among the data of the respective detection units acquired by the data acquisition unit is abnormal;
the first abnormality determination unit and the second abnormality determination unit differ in determination criterion of determination for data abnormality;
the rank indicating a highest abnormality degree recognized by the rank recognition unit is an A-rank;
when the first abnormality determination unit determines that all the data of the respective detection units acquired by the data acquisition unit are abnormal or the second abnormality determination unit determines that the at least one data is abnormal, the rank recognition unit recognizes the A-rank.

(Aspect 20) In the diagnostic device according to the aspect 1:
N and N+1 each denote a count of execution of the data acquisition unit; the data acquired by the data acquisition unit for the N-th time is data N; and the data acquired by the data acquisition unit for the (N+1)-th time is data N+1,
the diagnostic device further including:
a detection functionality setting unit (S170) that, when the rank recognition unit recognizes the rank indicating a low abnormality degree, sets functionality lower than when the rank recognition unit recognizes the rank indicating a high abnormality degree, wherein the functionality is a functionality to detect the state of the diagnosis target by the detection unit when the data acquisition unit acquires the data N+1.

## Claims

1. A diagnostic device comprising:
a storage unit (17, 17a to 17e) for storing data;
at least one detection unit (11, 12, 13, 14, 15) that detects a state of a diagnosis target (2);
a data acquisition unit (S100) that repeatedly executes acquiring data indicating the state of the diagnosis target from the detection unit;
a rank recognition unit (S120, S130) that repeatedly recognizes a rank indicating an abnormality degree of the diagnosis target based on the data acquired by the data acquisition unit;
a storage control unit (S150A, S150B, S152A, S152B) that repeatedly stores the data acquired by the data acquisition unit together with the rank and acquisition order information in the storage unit, the acquisition order information being information indicating in which order the data is acquired by the data acquisition unit,
wherein a rank indicating a lowest abnormality degree among the ranks stored in the storage unit is a lowest rank, the data used by the rank recognition unit in recognizing the lowest rank is lowest rank data, the data acquired by the data acquisition unit at latest timing is latest data, and a rank recognized by the rank recognition unit based on the latest data is a latest rank; and
a rank determination unit (S151A, S151B) that determines whether or not either one of: the latest rank indicating the abnormality degree higher than the lowest rank; and the latest rank matching the lowest rank in the abnormality degree is established, wherein:
when the rank determination unit determines that the either one is established, the storage control unit stores the latest data in the storage unit in place of the lowest rank data.

2. The diagnostic device according to claim 1, wherein:
when the rank determination unit determines that the either one is established, the storage control unit stores the latest rank in the storage unit in place of the lowest rank.

3. The diagnostic device according to claim 1, wherein:
when the rank determination unit determines that the either one is established, the storage control unit stores the acquisition order information of the latest data in the storage unit in place of the acquisition order information of the lowest rank data.

4. The diagnostic device according to claim 1, wherein:
when there is a plurality of the lowest rank data stored in the storage unit, the storage control unit stores the latest data in place of the lowest rank data acquired by the data acquisition unit at oldest timing among the plurality of the lowest rank data.

5. The diagnostic device according to claim 1, further comprising:
a data transmission unit (S160) that transmits the data, the rank, and the acquisition order information to an external device (20) so that the data acquired by the data acquisition unit is stored in the external device (20) together with the rank and the acquisition order information.

6. The diagnostic device according to claim 5, wherein:
the data used by the rank recognition unit in recognizing the rank indicating a low abnormality degree is low rank data, and the data used by the rank recognition unit in recognizing the rank indicating a high abnormality degree is high rank data; and
the data transmission unit transmits the high rank data preferentially over the low rank data.

7. The diagnostic device according to claim 6, wherein
the data transmission unit transmits the high rank data to the external device and refrains from transmitting the low rank data to the external device, thereby transmitting the high rank data preferentially over the low rank data.

8. The diagnostic device according to claim 7, wherein:
N-1, N, and N+2 each denote a count of execution of the data acquisition unit; the data acquired by the data acquisition unit for the (N-1)-th time is data N-1; the data acquired by the data acquisition unit for the N-th time is data N; the data acquired by the data acquisition unit for the (N+1)-th time is data N+1; and
when the rank recognition unit recognizes a highest rank indicating a highest abnormality degree based on the data N, the data transmission unit transmits the data N-1 and the data N+1 to the external device in addition to the data N.

9. The diagnostic device according to claim 6, wherein:
the data transmission unit transmits the high rank data to the external device at a higher communication speed than the low rank data, thereby transmitting the high rank data preferentially over the low rank data.

10. The diagnostic device according to claim 9, wherein:
N-1 and N each denote a count of execution of the data acquisition unit; the data acquired by the data acquisition unit for the (N-1)-th time is data N-1; and the data acquired by the data acquisition unit for the N-th time is data N,
further comprising:
a determination unit (S212) that determines whether or not an amount of change being an absolute value of a difference between the data N-1 and the data N is less than a threshold value (Sa), wherein:
where the rank recognition unit recognizes a highest rank indicating a highest abnormality degree based on the data N-1 and recognizes the highest rank based on the data N,
when the determination unit determines that the amount of change is less than the threshold value, the data transmission unit transmits the data N to the external device at a lower communication speed than when the determination unit determines that the amount of change is greater than or equal to the threshold value.

11. The diagnostic device according to claim 10, wherein:
the determination unit is a first determination unit; the threshold value is a first threshold value; and a second threshold value (Sb) is smaller than the first threshold value,
further comprising
a second determination unit (S213) that determines whether or not the amount of change is less than the second threshold value, wherein:
where the rank recognition unit recognizes the highest rank indicating the highest abnormality degree based on the data N-1 and recognizes the highest rank based on the data N,
when the second determination unit determines that the amount of change is less than the second threshold value, the data transmission unit transmits the data N to the external device at a lower communication speed than when the second determination unit determines that the amount of change is greater than or equal to the second threshold value.

12. The diagnostic device according to claim 6, wherein:
the data transmission unit transmits the high rank data to the external device at a higher communication rate than the low rank data, thereby transmitting the high rank data preferentially over the low rank data.

13. The diagnostic device according to claim 11, wherein:
N-1 and N each denote a count of execution of the data acquisition unit; the data acquired by the data acquisition unit for the (N-1)-th time is data N-1; and the data acquired by the data acquisition unit for the N-th time is data N,
further comprising
a determination unit (S212) that determines whether or not an amount of change being an absolute value of a difference between the data N-1 and the data N is less than a threshold value (Sa), wherein:
where the rank recognition unit recognizes a highest rank indicating a highest abnormality degree based on the data N-1, and the rank recognition unit recognizes the highest rank based on the data N,
when the determination unit determines that the amount of change is less than the threshold value, the data transmission unit transmits the data N to the external device at a lower communication rate than when the determination unit determines that the amount of change is greater than or equal to the threshold value.

14. The diagnostic device according to claim 13, wherein:
the determination unit is a first determination unit; the threshold value is a first threshold value; and a second threshold value (Sb) is smaller than the first threshold value,
further comprising
a second determination unit (S213) that determines whether or not the amount of change is less than the second threshold value, wherein:
where the rank recognition unit recognizes the highest rank indicating the highest abnormality degree based on the data N-1 and recognizes the highest rank based on the data N,
when the second determination unit determines that the amount of change is less than the second threshold value, the data transmission unit transmits the data N to the external device at a lower communication rate than when the second determination unit determines that the amount of change is greater than or equal to the second threshold value.

15. The diagnostic device according to claim 1, wherein:
N and M each denote a count of execution of the data acquisition unit; M is an integer less than N; the data acquired by the data acquisition unit for the N-th time is data N; and the data acquired by the data acquisition unit for the M-th time is data M,
further comprising:
a data transmission unit (S261, S262, S273) that transmits the data N, the rank, and the acquisition order information to an external device (20) so that the data N is stored in the external device together with the rank and the acquisition order information,
wherein the rank indicating a highest abnormality degree recognized by the rank recognition unit is an A-rank;
an A-rank determination unit (S200) that determines whether or not the rank recognized by the rank recognition unit based on the data N is the A-rank; and
a transmission determination unit (S260, S271) that determines whether or not a communication unit (16) is in execution of transmitting the data M, the rank and the acquisition order information to the external device in order for the data M to be stored in the external device together with the rank and the acquisition order information, wherein:
when the A-rank determination unit determines that the rank recognized by the rank recognition unit is the A-rank and the transmission determination unit determines that the data M, the rank and the acquisition order information have not been transmitted by the communication unit to the external device, the data transmission unit (S261) transmits the data N to the external device together with the rank and the acquisition order information; and
when the A-rank determination unit determines that the rank recognized by the rank recognition unit is the A-rank and the transmission determination unit determines that the communication unit is in execution of transmitting the data M, the rank and the acquisition order information to the external device, the data transmission unit (S262) transmits the data N to the external device together with the rank and the acquisition order information after the communication unit transmits the data M and the rank and the acquisition order information.

16. The diagnostic device according to claim 15, wherein:
a rank recognized by the rank recognition unit indicating the abnormality degree lower than the A-rank is a B-rank,
further comprising:
a B-rank determination unit (S270) that determines whether or not the rank recognized by the rank recognition unit based on the data N is the B-rank; and
a data pending unit (S272) that defers transmitting the data by the communication unit to the external device together with the rank and the order of acquisition information, wherein:
when the B-rank determination unit determines that the rank recognized by the rank recognition unit is the B-rank and the transmission determination unit determines that the data M, the rank and the acquisition order information have not been transmitted by the communication unit to the external device, the data transmission unit (S273) transmits the data N to the external device together with the rank and the acquisition order information; and
when the B-rank determination unit determines that the rank recognized by the rank recognition unit is the B-rank and the transmission determination unit determines that the communication unit is in execution of transmitting the data M, the rank and the acquisition order information to the external device, the data pending unit defers transmitting the data N to the external device together with the rank and the acquisition order information.

17. The diagnostic device according to claim 16, wherein:
L denotes the count of execution of the data acquisition unit and is an integer greater than N; the data acquired by the data acquisition unit for the L-th time is data L; and a rank recognized by the rank recognition unit indicating the abnormality degree lower than the B-rank is a C-rank,
further comprising:
a C-rank determination unit (S270) that determines whether or not the rank recognized by the rank recognition unit based on the data L is the C-rank;
a first transmission refrain unit (S276a, S277a, S278) that refrains from transmitting the data L to the external device from the communication unit together with the rank and the acquisition order information when the C-rank determination unit determines that the rank recognized by the rank recognition unit is the C-rank,
wherein the transmission determination unit is a first transmission determination unit;
a second transmission determination unit (S275) that determines whether or not the communication unit is in execution of transmitting the data M to the external device together with the rank and the acquisition order information for the data M to be stored in the external device together with the rank and the acquisition order information; and
a pending data transmission unit (S276) that transmits the data N, transmission of which has been pending by the data pending unit, to the external device together with the rank and the acquisition order information when the C-rank determination unit determines that the rank recognized by the rank recognition unit is the C-rank and the second transmission determination unit determines that the data M has not been transmitted to the external device by the communication unit together with the rank and the acquisition order information; and
a second data transmission refrain unit (S277) that refrains from transmitting the data N together with the rank and the acquisition order information to the external device when the C-rank determination unit determines that the rank recognized by the rank recognition unit is the C-rank and the second transmission determination unit determines that the communication unit is in execution of transmitting the data M to the external device together with the rank and the acquisition order information.

18. The diagnostic device according to claim 1, wherein:
the at least one detection unit is a plurality of detection units that detect a plurality of types of the state of the diagnosis target;
the data acquisition unit acquires the data indicating the plurality of types of the state of the diagnosis target detected by the plurality of detection units;
for each detection unit, the storage control unit stores the data indicating the plurality of types of the state in the storage unit;
the rank recognition unit recognizes the rank based on the data indicating the plurality of types of the state; and
for each detection unit, the storage control unit stores the latest data in the storage unit in place of the lowest rank data.

19. The diagnostic device according to claim 1, wherein:
the rank recognition unit includes:
a first abnormality determination unit (S121) that determines whether all the data of the respective detection units acquired by the data acquisition unit are abnormal; and
a second abnormality determination unit (S126, S127) that determines whether at least one data among the data of the respective detection units acquired by the data acquisition unit is abnormal;
the first abnormality determination unit and the second abnormality determination unit differ in determination criterion of determination for data abnormality;
the rank indicating a highest abnormality degree recognized by the rank recognition unit is an A-rank;
when the first abnormality determination unit determines that all the data of the respective detection units acquired by the data acquisition unit are abnormal or the second abnormality determination unit determines that the at least one data is abnormal, the rank recognition unit recognizes the A-rank.

20. The diagnostic device according to claim 1, wherein:
N and N+1 each denote a count of execution of the data acquisition unit; the data acquired by the data acquisition unit for the N-th time is data N; and the data acquired by the data acquisition unit for the (N+1)-th time is data N+1,
further comprising:
a detection functionality setting unit (S170) that, when the rank recognition unit recognizes the rank indicating a low abnormality degree, sets functionality lower than when the rank recognition unit recognizes the rank indicating a high abnormality degree, wherein the functionality is a functionality to detect the state of the diagnosis target by the detection unit when the data acquisition unit acquires the data N+1.
